# EUROPEAN PATENT APPLICATION

(11) **EP 4 836 579 A1**
(43) Date of publication of application: **04.11.2026**
(21) Application number: 24910995.0
(22) Date of filing: 23.12.2024
(51) Int. Cl.: H04W 74/0833

(54) **TRANSMISSION PROCESSING METHOD AND APPARATUS, TRANSMISSION CONFIGURATION METHOD AND APPARATUS, TERMINAL, AND NETWORK SIDE DEVICE**

(30) Priority: 29.12.2023 CN 202311874041
(71) Applicant: Vivo Mobile Communication Co., Ltd., Dongguan, Guangdong 523863 (CN)
(72) Inventor: LU, Zhi, Dongguan, Guangdong 523863 (CN); WANG, Lihui, Dongguan, Guangdong 523863 (CN)
(74) Representative: Lavoix
(86) International application number: PCT/CN2024/141274
(87) International publication number: WO 2025/140067

(57) **Abstract**

This application discloses a transmission processing method and apparatus, a transmission configuration method and apparatus, a terminal, and a network side device, and pertains to the field of communication technologies. A method in embodiments of this application includes: A terminal determines a valid random access occasion. The valid random access occasion includes a random access occasion in an uplink subband of a first time domain unit or a random access occasion in the frequency domain of a second time domain unit, and the second time domain unit is an uplink time domain unit or a flexible time domain unit not configured with a subband. The terminal performs transmission on the valid random access occasion.

## Description

### CROSS-REFERENCE TO RELATED APPLICATIONS

This application claims priority to Chinese Patent Application No. 202311874041.9, filed on December 29, 2023, which is incorporated herein by reference in its entirety.

### TECHNICAL FIELD

This application pertains to the field of communication technologies, and specifically relates to a transmission processing method and apparatus, a transmission configuration method and apparatus, a terminal, and a network side device.

### BACKGROUND

A future mobile communication system needs to adapt to more diversified scenario and service requirements such as enhanced mobile broadband (enhanced mobile broadband, eMBB), ultra-reliable and low latency communications (Ultra-Reliable and Low Latency Communications, URLLC), and massive machine type of communication (massive Machine Type of Communication, mMTC). These scenarios impose requirements such as high reliability, low latency, large bandwidth, and wide coverage for the system.

However, currently, a terminal can send related information in a random access procedure only in an uplink symbol or a flexible symbol, and does not consider self-interference of a base station and cross-link interference between user equipments (User Equipment, UE) caused by full-duplex communication, which affects system performance, prolongs an access delay, and cannot meet diversified scenario and service requirements.

### SUMMARY

Embodiments of this application provide a transmission processing method and apparatus, a transmission configuration method and apparatus, a terminal, and a network side device.

According to a first aspect, a transmission processing method is provided, including:
determining, by a terminal, a valid random access occasion, where the valid random access occasion includes a random access occasion in an uplink subband of a first time domain unit or a random access occasion in the frequency domain of a second time domain unit, and the second time domain unit is an uplink time domain unit or a flexible time domain unit not configured with a subband; and
performing, by the terminal, transmission on the valid random access occasion.

According to a second aspect, a transmission processing method is provided, including:
receiving, by a network device, transmission performed by a terminal on a valid random access occasion, where the valid random access occasion includes a random access occasion in an uplink subband of a first time domain unit or a random access occasion in the frequency domain of a second time domain unit; and
the second time domain unit is an uplink time domain unit or a flexible time domain unit not configured with a subband.

According to a third aspect, a transmission configuration method is provided, including:
receiving, by a terminal, a spatial domain parameter sent by a network side device; and
performing, by the terminal, transmission on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

According to a fourth aspect, a transmission configuration method is provided, including:
sending, by a network side device, a spatial domain parameter to a terminal; and
receiving, by the network side device, transmission performed by the terminal on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

According to a fifth aspect, a transmission processing apparatus is provided, including:
a determining module, configured to determine a valid random access occasion, where the valid random access occasion includes a random access occasion in an uplink subband of a first time domain unit or a random access occasion in the frequency domain of a second time domain unit, and the second time domain unit is an uplink time domain unit or a flexible time domain unit not configured with a subband; and
a first transmission module, configured to perform transmission on the valid random access occasion.

According to a sixth aspect, a transmission processing apparatus is provided, including:
a first receiving module, configured to receive transmission performed by a terminal on a valid random access occasion, where the valid random access occasion includes a random access occasion in an uplink subband of a first time domain unit or a random access occasion in the frequency domain of a second time domain unit; and
the second time domain unit is an uplink time domain unit or a flexible time domain unit not configured with a subband.

According to a seventh aspect, a transmission configuration apparatus is provided, including:
a second receiving module, configured to receive a spatial domain parameter sent by a network side device; and
a second transmission module, configured to perform transmission on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

According to an eighth aspect, a transmission configuration apparatus is provided, including:
a first sending module, configured to send a spatial domain parameter to a terminal; and
a third receiving module, configured to receive transmission performed by the terminal on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

According to a ninth aspect, a terminal is provided. The terminal includes a processor and a memory. The memory stores a program or instructions capable of being run on the processor, and when the program or instructions are executed by the processor, the steps of the method according to the first aspect or the third aspect are implemented.

According to a tenth aspect, a terminal is provided, including a processor and a communication interface, where the processor is configured to determine a valid random access occasion, where the valid random access occasion includes a random access occasion in an uplink subband of a first time domain unit or a random access occasion in the frequency domain of a second time domain unit, and the second time domain unit is an uplink time domain unit or a flexible time domain unit not configured with a subband; and the communication interface is configured to perform transmission on the valid random access occasion.

According to an eleventh aspect, a terminal is provided, including a processor and a communication interface, where the communication interface is configured to: receive a spatial domain parameter sent by a network side device; and perform transmission on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

According to a twelfth aspect, a network side device is provided, where the network side device includes a processor and a memory, the memory stores a program or instructions capable of being run on the processor, and the program or the instructions are executed by the processor to implement the steps of the method according to the second aspect or the fourth aspect.

According to a thirteenth aspect, a network side device is provided, including a processor and a communication interface, where the communication interface is configured to: receive transmission performed by a terminal on a valid random access occasion, where the valid random access occasion includes a random access occasion in an uplink subband of a first time domain unit or a random access occasion in the frequency domain of a second time domain unit; and
the second time domain unit is an uplink time domain unit or a flexible time domain unit not configured with a subband.

According to a fourteenth aspect, a network side device is provided, including a processor and a communication interface, where the communication interface is configured to: send a spatial domain parameter to a terminal; and receive transmission performed by the terminal on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

According to a fifteenth aspect, a readable storage medium is provided. The readable storage medium stores a program or instructions. The program or the instructions are executed by a processor to implement the steps of the method according to the first aspect, or implement the steps of the method according to the second aspect, or implement the steps of the method according to the third aspect, or implement the steps of the method according to the fourth aspect.

According to a sixteenth aspect, a wireless communication system is provided, including a terminal and a network side device. The terminal may be configured to perform the steps of the method according to the first aspect, and the network side device may be configured to perform the steps of the method according to the second aspect.

According to a seventeenth aspect, a wireless communication system is provided, including a terminal and a network side device. The terminal may be configured to perform the steps of the method according to the third aspect, and the network side device may be configured to perform the steps of the method according to the fourth aspect.

According to an eighteenth aspect, a chip is provided. The chip includes a processor and a communication interface, the communication interface is coupled to the processor, and the processor is configured to run a program or instructions to implement the method according to the first aspect, or implement the method according to the second aspect, or implement the method according to the third aspect, or implement the method according to the fourth aspect.

According to a nineteenth aspect, a computer program/program product is provided. The computer program/program product is stored in a storage medium, and the program/program product is executed by at least one processor to implement the steps of the method according to the first aspect, or implement the steps of the method according to the second aspect, or implement the steps of the method according to the third aspect, or implement the steps of the method according to the fourth aspect.

In the embodiments of this application, the terminal can determine the random access occasion in the uplink subband of the first time domain unit or the random access occasion in the frequency domain of the second time domain unit (the uplink time domain unit not configured with a subband) as the valid random access occasion, to perform transmission on the valid random access occasion, thereby avoiding self-interference and cross-link interference, improving system performance, and reducing an access delay.

### BRIEF DESCRIPTION OF DRAWINGS

FIG. 1 is a block diagram of a wireless communication system;
FIG. 2 is a schematic diagram of subband non-overlapping full duplex of a DL slot;
FIG. 3 is a schematic diagram of subband non-overlapping full duplex of a UL slot;
FIG. 4 is a schematic diagram of subband and GB configurations of a network full-duplex mode and a terminal full-duplex mode;
FIG. 5 is a schematic diagram of a multi-slot structure;
FIG. 6 is a schematic flowchart 1 of a transmission processing method according to an embodiment of this application;
FIG. 7 is a schematic diagram of a valid RO;
FIG. 8 is a schematic diagram 1 of an RO configuration;
FIG. 9 is a schematic diagram 2 of an RO configuration;
FIG. 10 is a schematic diagram 1 of transmission according to an embodiment of this application;
FIG. 11 is a schematic diagram 2 of transmission according to an embodiment of this application;
FIG. 12 is a schematic diagram 3 of transmission according to an embodiment of this application;
FIG. 13 is a schematic diagram of SSB-to-RO mapping;
FIG. 14 is a schematic diagram 3 of an RO configuration;
FIG. 15 is a schematic flowchart 2 of a transmission processing method according to an embodiment of this application;
FIG. 16 is a schematic flowchart 3 of a transmission processing method according to an embodiment of this application;
FIG. 17 is a schematic flowchart 4 of a transmission processing method according to an embodiment of this application;
FIG. 18 is a schematic diagram 1 of a module structure of a transmission processing apparatus according to an embodiment of this application;
FIG. 19 is a schematic diagram 2 of a module structure of a transmission processing apparatus according to an embodiment of this application;
FIG. 20 is a schematic diagram 3 of a module structure of a transmission processing apparatus according to an embodiment of this application;
FIG. 21 is a schematic diagram 4 of a module structure of a transmission processing apparatus according to an embodiment of this application;
FIG. 22 is a schematic diagram of a structure of a communication device according to an embodiment of this application;
FIG. 23 is a schematic diagram of a structure of a terminal according to an embodiment of this application; and
FIG. 24 is a schematic diagram of a structure of a network device according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6th Generation, 6G) communication system other than the NR system.

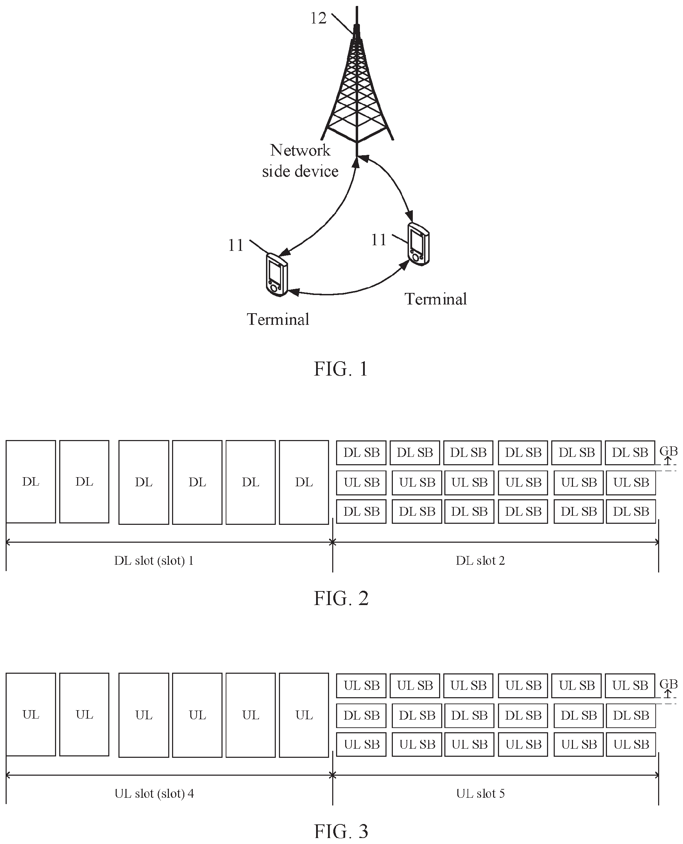

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), smart home (a home device with a wireless communication function, for example, a refrigerator, a television, a laundry machine, or a furniture), a gaming console, a personal computer (Personal Computer, PC), a teller machine, a self-service machine, or another terminal side device. The wearable device includes: a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, and the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or another proper term in the art. The base station is not limited to a specific technical term, provided that same technical effects are achieved. It should be noted that in the embodiments of this application, only a base station in an NR system is used as an example for description, and a specific type of the base station is not limited.

For ease of understanding, the following describes some content related to this embodiment of this application.

### I. Random access resource selection

A random access procedure may be a contention-based random access procedure, or may be a contention-free random access procedure. The random access procedure may be a 4-step random access procedure (also referred to as a Type-1 random access procedure) or a 2-step random access procedure (also referred to as a Type-2 random access procedure).

In a contention-based 4-step random access procedure (Random Access Channel, RACH), a terminal (for example, a user equipment (User Equipment, UE)) first sends Msg1 including a preamble (preamble) to a network. After detecting a preamble, the network sends Msg2/a random access response (Random Access Response, RAR) message including a number of the preamble detected by the network and an uplink radio resource allocated to the UE to send Msg3. After receiving Msg2, if the UE confirms that at least one of the number that is of the preamble and that is carried in Msg2 is consistent with a number of the preamble sent by the UE, the UE sends, based on a resource indicated in the RAR, Msg3 including contention resolution information. After receiving Msg3, the network sends Msg4 including contention resolution information. The UE receives Msg4, and confirms that the contention resolution information is consistent with that sent by the UE in Msg3, thereby completing 4-step random access.

The network includes uplink grant (UL grant) information in the RAR to indicate MSG3 physical uplink shared channel (Physical Uplink Shared Channel, PUSCH) scheduling information, and includes information such as a RACH preamble identifier (RACH preamble ID, RAPID), a temporary cell radio network temporary identifier (Temporary Cell Radio Network Temporary Identitifier, TC-RNTI), and a time advance (Time Advance, TA). If the network does not receive the MSG3 PUSCH, retransmission of the MSG3 PUSCH may be scheduled in a physical downlink control channel (Physical Downlink Control Channel, PDCCH) scrambled by using the TC-RNTI.

For the contention-based random access procedure, different UEs randomly select preambles for transmission. In this case, different UEs may select the same preamble for sending on the same time-frequency radio resource (also referred to as a random access occasion (RACH Occasion, RO)). This case may be understood as a preamble conflict for the UE. In this case, different UEs receive the same RAR, and at this point, different UEs transmit the MSG3 PUSCH based on the scheduling information in the RAR UL grant. The network can obtain, on one MSG3 PUSCH scheduling resource, a PUSCH (including contention resolution information) sent by only one UE. Therefore, the network includes, in MSG4, the contention resolution information received in the MSG3. If the contention resolution information in MSG4 received by the UE matches the contention resolution information sent by the UE in the MSG3 PUSCH, the UE considers that contention resolution succeeds. If the contention resolution information in MSG4 received by the UE does not match the contention resolution information transmitted by the UE in the MSG3 PUSCH, the UE considers that contention resolution fails.

If contention resolution fails, the UE reselects a physical random access channel (Physical Random Access Channel, RACH) sending resource, performs physical random access channel (Physical Random Access Channel, PRACH) sending, and performs a next random access attempt.

In the 2-step random access procedure (2-step RACH), a first step is that the UE sends MsgA to a network side. After receiving MsgA, the network side sends a MsgB message to the UE. If the UE does not receive MsgB within a certain period of time, the UE adds up counters for counting a quantity of times MsgA is sent and resends MsgA. If the counter for counting the quantity of times MsgA is sent reaches a specific threshold, the UE switches from the 2-step random access procedure to the 4-step random access procedure. MsgA includes a MsgA preamble part and a MsgA PUSCH part. The preamble part is sent on an RO used for the 2-step RACH, and the PUSCH part is sent on a MsgA PUSCH resource associated with sending of the MsgA preamble and the RO. The MsgA PUSCH resource is a group of PUSCH resources configured with respect to each PRACH slot (slot), including a time-frequency resource and a demodulation reference signal (DeModulation Reference Signal, DMRS) resource.

### II. Random access resource selection and synchronization signal block (Synchronization Signal and PBCH block, SSB)-to-RO mapping (mapping)

In new radio (New Radio, NR), a cell may configure, at one time domain location for PRACH transmission, a plurality of frequency division multiplexed (Frequency Division Multiplexing, FDM) PRACH transmission occasions (transmission occasion) (or referred to as a PRACH Occasion), which is simply referred to as an RO herein for brevity. At one moment, a quantity of ROs on which FDM may be performed may be: {1, 2, 4, 8}. At one moment, eight RO resources are distributed at different frequencies.

A random access preamble (Preamble) can be transmitted only on a time domain resource (namely, an RO) configured by using a parameter PRACH configuration index (PRACHConfigurationIndex), the random access preamble can be transmitted only on a frequency domain resource configured by using a parameter prach-FDM, and a PRACH frequency domain resource is *n_{RA}* ∈ {0,1, ... , *M* - 1}, where M is equal to a higher-layer parameter prach-FDM. During initial access, the PRACH frequency domain resource *n_{RA}* is numbered in ascending order starting from an RO with a lowest frequency within an initial active uplink bandwidth part (initial active uplink bandwidth part). Otherwise, the PRACH frequency domain resource is numbered in ascending order starting from an RO with a lowest frequency within an active uplink bandwidth part (active uplink bandwidth part).

In NR, there is an association relationship between the RO and an actually sent SSB (SS/PBCH block, synchronous signal/physical broadcast channel block, sometimes also directly simply referred to as an SS block, a synchronization signal block). One SSB may be associated with a plurality of ROs, or a plurality of SSBs may be associated with one RO (in this case, different SSBs correspond to different preamble). Usually, a base station may send different SSBs through different beams. A corresponding UE sends a preamble on an RO associated with an SSB. In this way, the UE selects, based on strength of a received downlink beam/SSB, an RO/"RO and preamble combination" associated with an SSB with a good signal, to send Msg1. In this way, the network may determine, based on the RO/"RO and preamble combination" of the received preamble, the SSB selected by the UE, and send Msg2 on a downlink beam corresponding to the SSB, to ensure received quality of a downlink signal.

### III. PRACH time domain resource location (period, occasion, or the like)

A PRACH resource is a periodic resource. In the time domain, different PRACH preamble formats have different durations. A time domain location of the PRACH resource is defined by using a PRACH configuration period, a radio frame index, a subframe/slot index, a start PRACH OFDM symbol index in a slot, and a quantity of time domain ROs in the slot. Candidate values of the PRACH configuration period are {10, 20, 40, 80, 160} ms, and a PRACH resource is distributed in only one valid radio frame (10 ms) in each PRACH configuration period. The valid radio frame includes one or more subframes/slots, there is only one start PRACH OFDM symbol index in each subframe/slot, and there is one or more time domain ROs in one slot. In the frequency domain, different PRACH preamble formats and a subcarrier spacing jointly determine a frequency domain bandwidth occupied by a PRACH. For a long preamble format whose length is 839, when a PRACH subcarrier spacing is 1.25 kHz, the frequency domain bandwidth is 1.08 MHz (corresponding to six PRBs whose PUSCH subcarrier spacing is 15 kHz).

### IV. SSB-to-RO mapping cycle (mapping cycle)

In NR, there is an association relationship between an RO and an actually sent SSB (SS/PBCH block, synchronization signal/physical broadcast channel block, SSB for short). The RO is associated to the SSB in a sequence of frequency domain (from a low frequency to a high frequency) and time domain. One SSB may be associated with a plurality of consecutive ROs, or a plurality of SSBs may be associated with one RO (in this case, different SSBs correspond to different preambles). This is configured by a network by using a parameter ssb-perRACH-OccasionAndCB-PreamblesPerSSB.

After all SSBs are associated with the RO in one round, one SSB-to-RO mapping cycle is formed.

### V. Association period (association period)

An SSB-to-RO association period may include one or more SSB-to-RO mapping cycles.

The SSB-to-RO association period is defined as that at least one round of SSB-to-RO mapping is completed in the period, so that each actually sent SSB is mapped to at least one RO. An association period of SSB-to-RO mapping needs to be an integer multiple of a PRACH configuration period, and a multiple is a smallest value in values listed in Table 1, namely, a table of mapping between PRACH configuration period and SS/PBCH block to PRACH occasion association period (Mapping between PRACH configuration period and SS/PBCH block to PRACH occasion association period). The association period starts counting from a radio frame 0. In one association period, after one round of SSB-to-RO mapping is completed, a next round of mapping continues until remaining ROs are insufficient to complete one round of SSB-to-RO mapping. If the remaining ROs are insufficient to complete one round of SSB-to-RO mapping, these remaining ROs are an invalid RO set. All ROs in the invalid RO set cannot be associated with the SSB or used for PRACH transmission.

**Table 1**

| PRACH configuration period (configuration period) (msec) | Association period (number of PRACH configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

### VI. Valid PRACH occasion (valid PRACH occasions)

(1) For paired spectrum (frequency division duplexing (Frequency Division Duplexing, FDD)), all PRACH occasions are valid.
(2) For unpaired spectrum (unpaired spectrum) (time division duplexing (Time Division Duplexing, TDD)):
   If a UE does not receive a time division duplexing uplink-downlink common configuration (tdd-UL-DL-ConfigurationCommon), a PRACH occasion is not earlier than an SSB, and has an interval of at least Ngap symbols from a previous nearest SSB in a current PRACH slot. In this case, the PRACH occasion is valid.

If a UE receives tdd-UL-DL-ConfigurationCommon, a PRACH occasion is in a UL symbol or in a current PRACH slot, the PRACH occasion is not earlier than an SSB, has an interval of at least Ngap symbols from a previous nearest SSB, and has an interval of at least Ngap symbols from a previous last downlink (DownLink, DL) symbol, it is considered that the PRACH occasion is valid in a PRACH slot.

### 7. SSB-to-RO association pattern period (association pattern period)

In some configuration conditions, a quantity of valid ROs included in an association period of SSB-to-RO mapping is variable. Therefore, an NR protocol further defines a time domain repetition period of the association period of SSB-to-RO mapping by using the association pattern period. A maximum value of the association pattern period of SSB-to-RO mapping is 160 ms.

The SSB-to-RO association pattern period may include one or more SSB-to-RO association periods, and SSB-to-RO mapping is repeated with a period of the association pattern period.

### VIII. Transmission configuration indicator (Transmission Configuration Indicator, TCI) state of a control resource set (Control Resource Set, CORESET)

### (1) For a CORESET other than a CORESET whose index is 0:

If a UE has not been provided with a configuration of the TCI state by TCI StatesPDCCH ToAddList and TCI StatesDDCCH ToReleaseList of the CORESET, or has been provided with more than one configuration of the TCI state by TCI-StatesPDCCCH ToAddList or TCI-StatesDCCH ToRelaseList of the CORESET, but has not received a media access control control element (Media Access Control Control Element, MAC CE) activation command for one of TCI states, the UE assumes that a demodulation reference signal (DeModulation Reference Signal, DM-RS) antenna port associated with PDCCH reception is quasi-co-located with an SS/PBCH block identified by the UE during an initial access process.

If a UE has been provided with more than one configuration of the TCI state by TCI StatesPDCCH ToAddList and TCI StatesDDCCH ToReleaseList of the CORESET as a part of a current reconfiguration with synchronization process, but has not received a MAC CE activation command of one of described TCI states, the UE assumes that a DM-RS antenna port associated with PDCCH reception is quasi-co-located with an SS/PBCH block or a channel state information-reference signal (Channel State Information-Reference Signal, CSI-RS) resource identified by the UE during a random access procedure initiated in the reconfiguration with synchronization process.

(2) For the CORESET whose index is 0, the UE assumes that a DM-RS antenna port used for PDCCH reception in the CORESET is quasi-co-located with the following content:
one or more DL RSs configured by the TCI state, where the TCI state is indicated by a MAC CE activation command of the CORESET, if any; or
an SS/PBCH block identified by the UE during a latest random access procedure initiated by a PDCCH command that triggers a contention-free random access procedure, if the UE does not receive the MAC CE activation command indicating the TCI state of the CORESET after the latest random access procedure.

For the CORESET other than the CORESET whose index is 0, if a single TCI state of the CORESET is provided to the UE, or if the UE receives a MAC CE activation command for one of TCI states provided by the CORESET, the UE assumes that the DM-RS antenna port associated with PDCCH reception in the CORESET is quasi-co-located with one or more DL RSs configured by the TCI state. For the CORESET whose index is 0, the UE expects that a quasi co-location (Quasi Co-Location, QCL) type D (TypeD) of a CSI-RS of a TCI state indicated by the MAC CE activation command of the CORESET is provided by the SS/PBCH block.

If the UE receives a MAC CE activation command for one of TCI states, the UE applies the activation command in a first slot after a slot $k + 3 ⋅ {N}_{slot}^{subframe , μ}$. Herein, k is a slot in which the UE sends a physical uplink control channel (Physical Uplink Control Channel, PUCCH) that has hybrid automatic repeat request acknowledgement (Hybrid Automatic Repeat reQuest ACKnowledgement, HARQ-ACK) information of a PDSCH used to provide an activation command, and *µ* is a subcarrier space (SubCarrier Space, SCS) configuration used for the PUCCH. An active bandwidth part (BandWidth Part, BWP) is defined as an active BWP in a slot when an activation command is applied. ${N}_{slot}^{subframe , μ}$ is a quantity of slots included in one subframe when a subcarrier spacing is µ.

### IX. Subband non-overlapping full duplex (Subband non-overlapping Full duplex)

Subband non-overlapping full duplex improves a transmission delay and enhanced coverage.

For one DL slot (configured by tdd-UL-DL-ConfigurationCommon, or tdd-UL-DL-ConfigurationDedicated), a network configures a DL BWP for UE; and for an uplink (Uplink, UL) slot, the network configures a UL BWP for the UE.

For a full duplex scenario, there are the following cases (case):
For one DL slot (configured by tdd-UL-DL-ConfigurationCommon, or tdd-UL-DL-ConfigurationDedicated), as shown in FIG. 2,
Case 1: Configure a DL BWP, namely, a slot 1.
Case 2: Configure a DL BWP and a UL subband, namely, a slot 2.

For a UL slot (configured by tdd-UL-DL-ConfigurationCommon, or tdd-UL-DL-ConfigurationDedicated), as shown in FIG. 3,
Case 3: Configure a UL BWP, namely, a slot 4.

Case 4: Configure a UL BWP and a DL subband, namely, a slot 5.

For a subband full duplex (SubBand Full Duplex, SBFD) operation, one SBFD subband includes one resource block (Resource Block, RB) or one continuous RB set that has the same transmission direction.

A time domain unit (for example, a slot or a symbol) in which a gNB uses an SBFD operation may be referred to as an SBFD time domain unit (for example, a slot or a symbol).

In one manner, a base station and UE can perform only sending or receiving at one moment.

In one manner, full-duplex is performed on a gNB side, and the gNB can simultaneously perform receiving and sending. A UE side can use only a half-duplex mode, that is, can perform only sending or receiving at one moment.

In one manner, full-duplex is performed on the UE side, and the gNB and the UE may simultaneously perform receiving and sending. For full-duplex on the UE side, a relatively large guard interval (Guard Band, GB) may be required to suppress self-interference, for example, a GB greater than a full duplex (FD) operation of the base station.

For a communication device, self-interference is caused by simultaneously performing UL reception and DL sending. To ensure transmission in an interference direction, the communication device needs to have a self-interference cancellation capability, for example, reserve a guard band between a receiving frequency band and a sending frequency band. In this way, a throughput of the UE is reduced.

In the embodiments of this application, a valid random access occasion means that both a frequency domain resource and a time domain resource that are of the random access occasion are valid.

In the embodiments of this application, units of a time domain unit include but are not limited to a slot and a symbol.

In the embodiments of this application, a time domain unit including an uplink subband (UL SB) may be an uplink time domain unit, may be a downlink time domain unit, or may be a flexible time domain unit. Certainly, the uplink time domain unit, the downlink time domain unit, and the flexible time domain unit may also be configured with a downlink subband (DL SB). If the flexible time domain unit is configured with only a downlink subband (DL SB), resources of the flexible time domain unit that may be used for UL transmission may include resources of the flexible time domain unit other than the DL SB and a GB.

In the embodiments of this application, an uplink time domain unit not configured with a subband is also referred to as a UL only (only) time domain unit, a downlink time domain unit not configured with a subband is also referred to as a DL only time domain unit, and a flexible time domain unit not configured with a subband is also referred to as a flexible only time domain unit.

To simplify descriptions of the embodiments of this application, the uplink subband (located in the downlink time unit, the uplink time unit, or the flexible time unit) and the uplink time unit (not configured with a subband) are emphatically described. Other resource types and combinations are not excluded.

In the embodiments of this application, SSB-to-RO mapping may also mean a generalized association between a downlink signal and an uplink signal/resource, for example, an association between an SSB and small data transmission (Small Data Transmission, SDT), and an association between a channel state information reference signal (Channel State Information Reference Signal, CSI-RS) and an RO.

In the embodiments of this application, a RACH occasion (RO) may also be understood as a PRACH occasion, and means a time-frequency resource required for sending a PRACH sequence. The random access procedure means random access (Random Access, RA).

In the embodiments of this application, the SSB and the SS/PBCH block may be used interchangeably, or may be another name, and may mean any module that includes at least some synchronization signals, a broadcast signal, or another downlink broadcast signal.

In the embodiments of this application, the PRACH resource may be a PRACH time-frequency resource and/or a PRACH sequence.

In the embodiments of this application, a shared RO (shared RO) means a PRACH sequence used for a type of PRACH transmission and a PRACH sequence used for another type of PRACH transmission. A separate RO (Separate RO) or a separately configured RO (separately configured RO) means a PRACH occasion that is additionally configured only for different types of PRACH transmission.

In the embodiments of this application, the foregoing RO type is any one of the following: an RO resource of the uplink subband, an RO resource of the uplink time domain unit, an RO resource of the flexible time domain unit, and an RO resource across a plurality of resources. For example, the RO resource across a plurality of resources is an RO resource that occupies both the uplink subband and the uplink time domain unit. For ease of description, only the RO resource of the uplink subband and the RO resource of the uplink time domain unit are used as examples.

In the embodiments of this application, the following two full-duplex modes are defined to simplify descriptions:
A network full-duplex mode means that full-duplex is applied on a network side and half-duplex is applied on a terminal side.

A terminal full-duplex mode means that full-duplex is applied on the network side and full-duplex is applied on the terminal side.

The half-duplex on the terminal side may be understood as that the terminal can only receive a DL in one time unit (also referred to as a time domain unit), or send a UL signal or channel. The full-duplex on the terminal side may be understood as that the terminal simultaneously receives a DL and sends a UL signal or channel in one time unit.

The network full-duplex mode can enhance coverage, reduce a transmission delay, and improve resource utilization efficiency. The terminal full-duplex mode may improve a DL (UL) throughput while obtaining the foregoing gain.

Usually, a guard band is reserved between UL transmission and DL transmission. For example, the GB is reserved to achieve frequency isolation and reduce self-interference. Usually, a self-interference cancellation capability of the UE is less than that of the gNB side. For simultaneous sending and receiving on the UE side, a reserved GB needs to be larger than that of the gNB side. To be specific, more PRBs need to be reserved as a guard band.

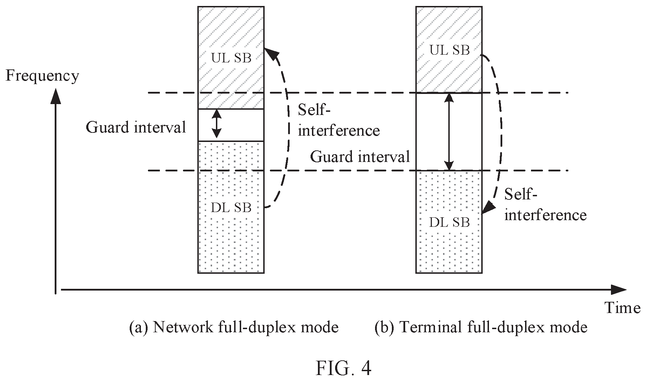

As shown in FIG. 4, (a) shows subband and GB configurations of full-duplex on a network side. To be specific, the network configures time-frequency resources of a UL SB and a DL SB (and/or a GB). On the UL SB, the network receives a UL channel or signal of served UE, and on the DL SB, the network sends a DL channel or signal to the served UE. DL sending can produce self-interference (self-interference) to UL receiving.

As shown in FIG. 4, (b) shows a subband configuration of full-duplex on a UE side. The network configures time-frequency resources of a UL SB and a DL SB (and/or a GB) of the UE, and UL sending of the UE produces self-interference to DL receiving.

Because capabilities of different UEs may be different, different GBs may need to be reserved.

In the embodiments of this application, enhanced duplex is used, and may also be referred to as an enhanced duplex mode, XDD, enhanced full-duplex, and an enhanced full-duplex mode. The enhanced duplex may be represented as at least one of supporting the uplink subband in the downlink time unit, or supporting the downlink subband in the uplink time unit, or supporting the uplink subband or supporting downlink subband transmission in the flexible time unit.

The enhanced duplex may include network full-duplex and terminal full-duplex.

The network notifies an enhanced duplex pattern (pattern) in a system information block (System Information Block, SIB) 1 or a master information block (Master Information Block, MIB), including at least one of the following: an enhanced duplex configuration period, an enhanced duplex mode period, and an uplink-downlink common configuration (UL-DL config common).

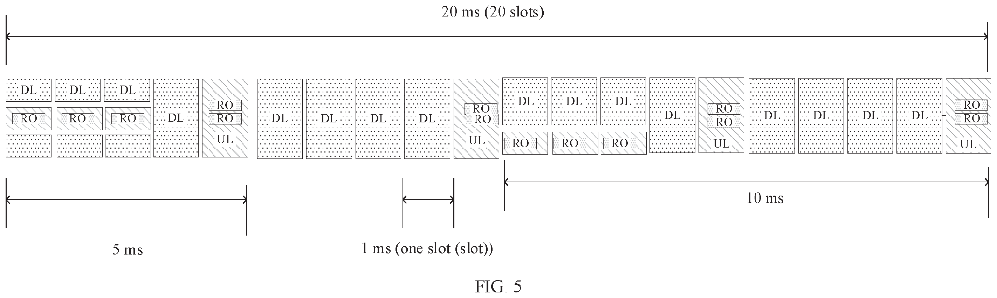

For example, as shown in FIG. 5, UL-DL config common is DDDDU, and a period is 5 ms. To be specific, five time domain units in one period (5 ms) are successively a downlink time domain unit, a downlink time domain unit, a downlink time domain unit, a downlink time domain unit, and an uplink time domain unit. An enhanced duplex configuration is 11100 00000, a mode (enhanced duplex mode) is DUD, and a period is 10 ms. To be specific, in 10 time domain units in one period (10 ms), first three time domain units are classified into three subbands based on the mode DUD. The enhanced duplex mode period is 10 ms (the enhanced duplex mode may vary with the mode period, for example, frequency domain subbands are DUD, DU, UD, ...). As shown in FIG. 5, in two enhanced duplex mode periods, in a first enhanced duplex mode period, a mode is DUD, and in a second enhanced duplex mode period, a mode is DU.

With reference to the accompanying drawings, a transmission processing method and apparatus, a transmission configuration method and apparatus, a terminal, and a network side device provided in the embodiments of this application are described below in detail by using some embodiments and application scenarios thereof.

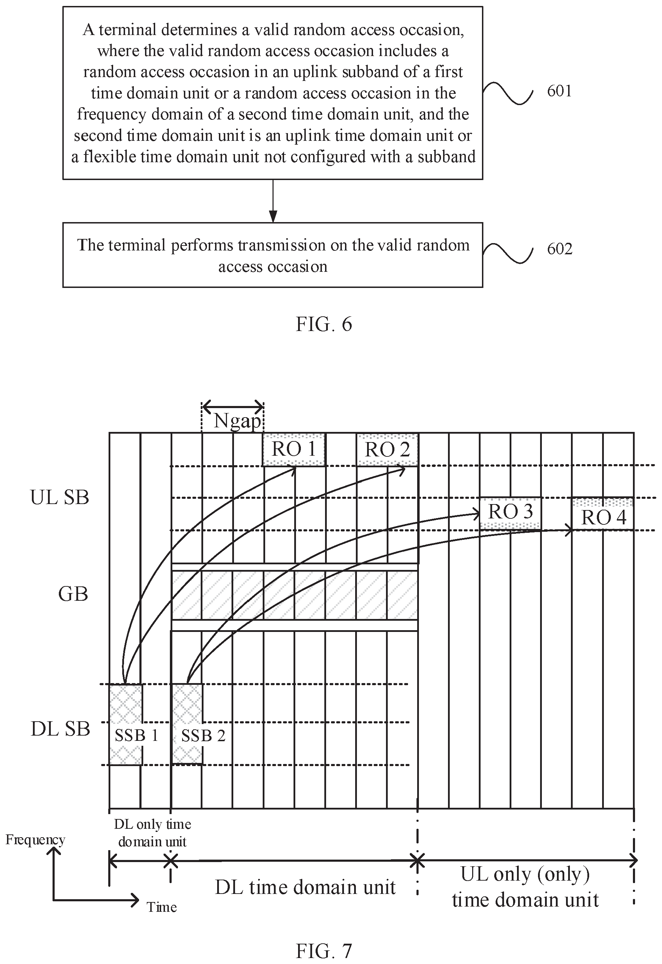

As shown in FIG. 6, a transmission processing method in an embodiment of this application includes:
Step 601: A terminal determines a valid random access occasion, where the valid random access occasion includes a random access occasion in an uplink subband of a first time domain unit or a random access occasion in the frequency domain of a second time domain unit, and the second time domain unit is an uplink time domain unit or a flexible time domain unit not configured with a subband.
Step 602: The terminal performs transmission on the valid random access occasion.

In this way, the terminal can determine the random access occasion in the uplink subband of the first time domain unit or the random access occasion in the frequency domain of the second time domain unit as the valid random access occasion, to perform transmission on the valid random access occasion, thereby avoiding self-interference and cross-link interference, improving system performance, and reducing an access delay.

The first time domain unit may be an uplink time domain unit, or may be a downlink time domain unit, or may be a flexible time domain unit. The second time domain unit is a UL only time domain unit or a flexible time domain unit. For a flexible time domain unit configured with only a DL subband, a valid RO is located on a resource other than a DL subband and a GB.

In other words, in this embodiment, for a frequency domain resource, a valid RO indicates that the RO is located in:
(1) a UL SB (a UL time domain unit, or a DL time domain unit, or a flexible time domain unit);
(2) any resource in the UL only time domain unit; and
(3) a resource in the flexible time domain unit.

If the flexible time domain unit is configured with only a DL SB, a valid RO is located in a resource of the flexible time domain unit other than the DL SB and the GB. Any resource on the UL only time domain unit may include any resource on a flexible only time domain unit.

Optionally, in this embodiment, before performing step 601, the terminal can learn of a location of one or more ROs. For example, a network side device configures an RO set, or a plurality of ROs are predefined. Further, the terminal may determine the valid RO from the one or more ROs.

It should be noted that the method in this embodiment of this application is preferably applied to a terminal in an SBFD communication scenario.

Optionally, in this embodiment, that the terminal determines the valid random access occasion includes:
the terminal obtains a configuration from a network side device or a predefined rule; and
the terminal determines the valid random access occasion based on the rule in random access occasions configured by the network side device, where
the rule includes one of the following:
   the valid random access occasion is located in the uplink subband of the first time domain unit; or
   in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
   the valid random access occasion is located in the uplink subband of the first time domain unit, and an interval between the valid random access occasion in a random access slot and a fourth time domain unit is greater than or equal to a third value; and
   the valid random access occasion is located in the uplink subband of the first time domain unit, and an interval between the valid random access occasion in the random access slot and a fifth time domain unit is greater than or equal to a fourth value.

Optionally, the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

Optionally, the first information is a time division duplexing uplink-downlink common configuration (tdd-UL-DL-ConfigurationCommon).

In addition, optionally, in this embodiment, that the terminal determines the valid random access occasion based on the rule in the random access occasions configured by the network side device includes:
in a case in which the time division duplexing uplink-downlink common configuration is received, the terminal determines that a random access occasion, in a random access slot, that is located in the uplink subband of the first time domain unit and that has an interval greater than or equal to the third value from the fourth time domain unit is the valid random access occasion.

That is, only when the terminal configures tdd-UL-DL-ConfigurationCommon, whether the RO in the uplink subband of the first time domain unit is valid is determined based on whether the RO in the random access slot has an interval greater than or equal to the third value from the fourth time domain unit.

Optionally, the first value and the second value are equal to a value of an interval N_{gap} symbols. N_{gap} is related to a subcarrier spacing. For example, the subcarrier spacing is 1.25 kHz or 5 kHz, and N_{gap} is equal to 0; or the subcarrier spacing is 15 kHz, 30 kHz, 60 kHz, or 120 kHz, and N_{gap} is equal to 2.

Certainly, the first value and the second value may alternatively be another value, which are configured by the network side device or predefined. In addition, the first value and the second value may be the same or different.

Optionally, the third value and the fourth value may also be configured by the network side device or predefined as the same value or different values.

In addition, in this embodiment, the rule may be understood as a requirement to be met by the valid RO in the time domain.

Rule 1: The valid random access occasion is located in the uplink subband of the first time domain unit.

That is, for an RO resource of a UL SB of the first time domain unit, all ROs are valid.

Rule 2: In a case in which the terminal is not configured with tdd-UL-DL-ConfigurationCommon, the valid random access occasion is located in the uplink subband of the first time domain unit, and the valid random access occasion is not earlier than the first synchronization signal block SSB in the random access slot in which the valid random access occasion is located, and has an interval greater than or equal to the first value from the first SSB; or in a case in which the terminal is configured with tdd-UL-DL-ConfigurationCommon, the valid random access occasion is located in the uplink subband of the first time domain unit, and the valid random access occasion is not earlier than the first SSB in the random access slot in which the valid random access occasion is located, has an interval greater than or equal to the second value from the first SSB, and has an interval greater than or equal to the second value from the third time domain unit.

Herein, for an RO resource, that an RO is not earlier than the first SSB may be understood as that, in a slot in which the RO is located, that is, the RO is located in a current PRACH slot, the RO is located after a last SSB in SSBs of the slot; a first SSB is an SSB closest to the RO in the SSBs of the slot; and the third time domain unit is a DL only symbol that is located before the RO and that is closest to the RO in the current PRACH slot.

Specifically, both the first value and the second value may be Ngap, and a unit is a symbol. Therefore, for the RO resource of the UL SB of the first time domain unit,
if a UE does not receive tdd-UL-DL-ConfigurationCommon, in the current PRACH slot, the RO is not earlier than the SSB, and has an interval of at least Ngap symbols from a previous nearest SSB, and it is considered that the RO is valid; or
if a UE receives tdd-UL-DL-ConfigurationCommon, in the current PRACH slot, the RO is not earlier than the SSB, has an interval of at least Ngap symbols from a previous nearest SSB, and has an interval of at least Ngap symbols from a previous last DL only symbol, and it is considered that the RO is valid.

Ngap may be predefined, or configured by a network. For example, Ngap is greater than or equal to 0.

Rule 3: The valid random access occasion is located in the uplink subband of the first time domain unit, and the interval between the valid random access occasion in the random access slot and the fourth time domain unit is greater than or equal to the third value; and
the valid random access occasion is located in the uplink subband of the first time domain unit, and the interval between the valid random access occasion in the random access slot and the fifth time domain unit is greater than or equal to the fourth value.

Herein, for an RO resource, the fourth time domain unit is a DL only symbol or a UL only symbol that is located before the RO and that is closest to the RO in the current PRACH slot; and the fifth time domain unit is a DL only symbol or a UL only symbol that is located after the RO and that is closest to the RO in the current PRACH slot.

Specifically, the third value and the fourth value may be the same or may be different, and a unit is a symbol. For example, the third value is X1, and the fourth value is X2. Therefore, for the RO of the UL SB of the first time domain unit,

If the UE does not receive tdd-UL-DL-ConfigurationCommon, or the UE receives tdd-UL-DL-ConfigurationCommon, an RO has an interval of at least X1 symbol from the previous nearest DL only symbol or UL only symbol in a slot in which the RO is located, namely, the current PRACH slot, and it is considered that the RO is valid.

In the current PRACH slot, the RO has an interval of at least X2 symbols from the following nearest DL only symbol or UL only symbol, and it is considered that the RO is valid.

For example, it is assumed that the terminal is not configured with a time division duplexing uplink-downlink common configuration. As shown in FIG. 7, a random access slot includes a DL only time domain unit, a DL time domain unit, and a UL only time domain unit, an RO 1 and an RO 2 are located in a UL SB of the DL time domain unit, an RO 3 and an RO 4 are located in the UL only time domain unit, an SSB 1 is located in the DL only time domain unit, and an SSB 2 is located in a DL SB of the DL time domain unit. The RO 1 and the RO 2 are associated with the SSB 1, and the RO 3 and the RO 4 are associated with the SSB 2.

Therefore, because the RO 1 is located in the UL SB of the DL time domain unit, is located after the SSB 2 in a random access slot in which the RO 1 is located, and has an interval equal to Ngap symbols from the SSB 2, and the RO 1 conforms to the rule 2, the RO 1 is a valid RO. Similarly, the RO 2 also conforms to the rule 2, and therefore, is a valid RO. Because the RO 3 and the RO 4 are located in the UL only time domain unit, the RO 3 and the RO 4 are valid ROs.

It is assumed that the terminal is configured with a time division duplexing uplink-downlink common configuration. Similarly, as shown in FIG. 7, a random access slot includes a DL only time domain unit, a DL time domain unit, and a UL only time domain unit, an RO 1 and an RO 2 are located in a UL SB of the DL time domain unit, an RO 3 and an RO 4 are located in the UL only time domain unit, an SSB 1 is located in the DL only time domain unit, and an SSB 2 is located in a DL SB of the DL time domain unit. The RO 1 and the RO 2 are associated with the SSB 1, and the RO 3 and the RO 4 are associated with the SSB 2.

Therefore, because the RO 1 is located in the UL SB of the DL time domain unit, is located after the SSB 2 in a random access slot in which the RO 1 is located, has an interval equal to Ngap symbols from the SSB 2, and has an interval greater than Ngap symbols from the DL only time domain unit, and the RO 1 conforms to the rule 2, the RO 1 is a valid RO. Similarly, the RO 2 conforms to the rule 2, and therefore, is a valid RO. Because the RO 3 and the RO 4 are located in the UL only time domain unit, the RO 3 and the RO 4 are valid ROs.

Optionally, the foregoing rule for determining RO time domain validity may be extended to consider whether an RO overlaps an SSB.

The rule 2 may be extended to:
if the UE does not receive tdd-UL-DL-ConfigurationCommon, in the current PRACH slot, other than an RO overlapping an SSB, an RO is not earlier than the SSB, and has an interval of at least Ngap symbols from a previous nearest SSB, and it is considered that the RO is valid; or
if a UE receives tdd-UL-DL-ConfigurationCommon, in the current PRACH slot, other than an RO overlapping an SSB, an RO is not earlier than the SSB, has an interval of at least Ngap symbols from a previous nearest SSB, and has an interval of at least Ngap symbols from a previous last DL only symbol, and it is considered that the RO is valid.

The UE does not expect an SSB to be mapped to a time-domain overlapping RO or a previous RO.

In the foregoing content, it is known that the terminal determines the valid RO from one or more learned ROs. Specifically, the one or more ROs may be configured by the network side device. Therefore, in this embodiment of this application, optionally, the method further includes:
the terminal receives configuration information that is of a random access occasion and that is sent by the network side device, where
in the configuration information, a first configuration and a second configuration are the same configuration, or the first configuration and the second configuration are separate configurations;
the first configuration is a configuration of a random access occasion located in the uplink subband of the first time domain unit; and
the second configuration is a configuration of a random access occasion located in the frequency domain of the second time domain unit.

That is, the network side device may uniformly configure the RO in the first time domain unit and the RO in the second time domain unit; or may separately configure the RO in the first time domain unit and the RO in the second time domain unit. For example, when a unified configuration is used, the RO in the first time domain unit and the RO in the second time domain unit occupy the same frequency domain resource; or when a separate configuration is used, the RO in the first time domain unit and the RO in the second time domain unit occupy different frequency domain resources.

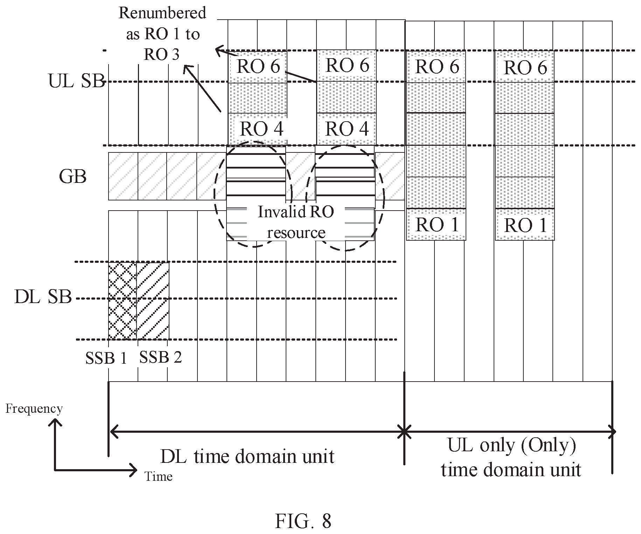

Specifically, as shown in FIG. 8, for an RO in a UL subband and an RO in a UL only time domain unit, the same RO configuration is used, including an RO 1 to an RO 6, that is, the same frequency domain resource is used. However, because an RO 1 to an RO 3 in the DL time domain unit are in the GB and the UL SB, the RO 1 to the RO 3 (ROs circled by dotted lines) in the DL time domain unit are unavailable. Therefore, the RO of the UL SB in the DL time domain unit is obtained after an RO located on an unavailable frequency domain resource is removed from the RO of the UL only time domain unit. Therefore, for the RO in the DL time domain unit, the terminal determines the valid RO in the RO 4 to the RO 6. In this case, the RO 4 to the RO 6 need to be renumbered as the RO 1 to the RO 3.

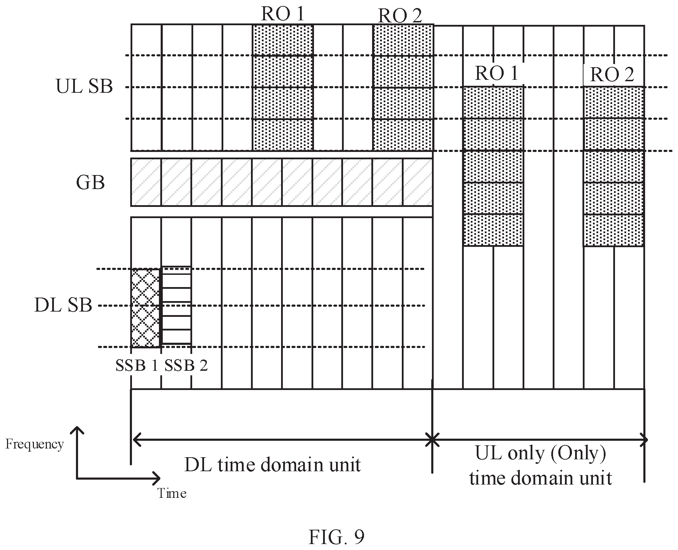

Specifically, as shown in FIG. 9, an RO of a UL subband and an RO of a UL only time domain unit are separately configured, an RO 1 and an RO 2 are located in the UL SB, and frequency domain locations of the RO 1 and the RO 2 are different from frequency domain resources of an RO 1 and an RO 2 of the UL only time domain unit.

In addition, in this embodiment, that the terminal performs transmission on the valid random access occasion includes:
the terminal receives a spatial domain parameter sent by the network side device; and
the terminal sends at least one of the following on the valid random access occasion based on the spatial domain parameter:
   a first message in a 2-step random access procedure;
   a first message in a 4-step random access procedure;
   a third message in the 4-step random access procedure;
   a configured grant based small data transmission;
   a common physical uplink control channel PUCCH used to acknowledge a fourth message in the 4-step random access procedure; and
   a random access success response message.

That is, the terminal can send, on the valid RO, at least one of the first message (MSGA) in the 2-step random access procedure, the first message (MSG1) in the 4-step random access procedure, the third message (MSG3) in the 4-step random access procedure, the configured grant based small data transmission (CG based SDT), the PUCCH used to acknowledge the fourth message in the 4-step random access procedure (Msg4 HARQ-ACK PUCCH), and the random access success response message (successRAR). Certainly, transmission on the valid RO is not limited to the foregoing content, and may further include MSG5. However, the spatial domain parameter used by the valid RO is indicated by the network side device.

Optionally, the spatial domain parameter includes a transmission configuration indicator (Transmission Configuration Indicator, TCI) state or spatial relation information (SpatialRelationInfo, SRI).

Specifically, the network side device indicates the spatial domain parameter in semi-static signaling (for example, an SIB message or an RRC release (release) message) or dynamic signaling.

Optionally, the terminal performs sending by using the spatial domain parameter. The spatial domain parameter is applied to an RO located in the UL SB, for example, a valid RO.

Optionally, the terminal performs sending by using the spatial domain parameter. The spatial domain parameter is applied to an RO that is located in the UL SB and that overlaps an SSB or a common control channel (for example, a PDCCH or a PDSCH that carries system information), for example, a valid RO.

Optionally, the terminal performs sending by using the spatial domain parameter. The spatial domain parameter is applied to an RO located in the UL SB and an RO located in the UL only time domain unit, for example, a valid RO.

Optionally, the terminal performs sending by using the spatial domain parameter. The spatial domain parameter is applied to an RO that is located in the UL SB and that overlaps an SSB or a common control channel, for example, a valid RO, and an RO that is located in the UL only time domain unit and that overlaps an SSB or a common control channel, for example, a valid RO.

Optionally, the spatial domain parameter sent by the network side device includes at least one of the following:
spatial domain parameters corresponding to different SSBs or common control channels; and
spatial domain parameters corresponding to different uplink transmission, where the uplink transmission is associated with an SSB.

In other words, the network side device may configure corresponding spatial domain parameters for different SSBs or common control channels. The network side device may further configure corresponding spatial domain parameters for different uplink transmission, such as ROs, especially valid ROs.

The spatial domain parameters corresponding to the different SSBs include at least one of the following:
a spatial domain parameter used for uplink transmission associated with an SSB; and
a spatial domain parameter used for downlink transmission corresponding to the uplink transmission associated with an SSB.

In this way, if the network side device configures the spatial domain parameters corresponding to the different SSBs or common control channels, and the spatial domain parameter is used for uplink transmission associated with an SSB, an RO resource, in particular a valid RO resource, located in the UL SB or the UL only time domain unit may be transmitted by using a spatial domain parameter corresponding to an SSB associated with the RO resource. Alternatively, in a case in which the RO overlaps the SSB or the common control channel, a spatial domain parameter corresponding to the SSB associated with the RO is used for transmission.

If the network side device configures the spatial domain parameters corresponding to the different SSBs or common control channels, and the spatial domain parameter is used for downlink transmission corresponding to uplink transmission associated with the SSB, for the RO, especially the valid RO, when downlink transmission corresponding to the RO is sent, a spatial domain parameter that is of the SSB associated with the downlink transmission and that is configured by the network side device may be used. Herein, downlink transmission corresponding to the RO may be understood as that the downlink transmission sends related information of the RO, for example, the RO sends MSG1, and the downlink transmission sends MSG2 corresponding to MSG1. In this case, downlink transmission corresponding to uplink transmission associated with the SSB may be understood as downlink transmission associated with the SSB.

When the network side device sends the spatial domain parameters corresponding to the different uplink transmission, the spatial domain parameter is used by the terminal to receive downlink transmission, so that when downlink transmission overlaps uplink transmission, a spatial domain parameter used for downlink transmission is determined.

Downlink transmission may be understood as a CORESET or a PDCCH or a PDSCH of the CORESET.

The terminal determines, based on an overlapping situation between UL transmission and DL transmission, whether to use a spatial domain parameter configured by the network.

Optionally, the terminal performs receiving by using the spatial domain parameter, and the spatial domain parameter is applied to a PDCCH or a PDSCH located in the DL SB.

Optionally, the terminal performs receiving by using the spatial domain parameter, and the spatial domain parameter is applied to a PDCCH or a PDSCH that is located in a DL SB and that overlaps an RO (for example, a valid RO).

Optionally, the terminal performs receiving by using the spatial domain parameter, and the spatial domain parameter is applied to a PDCCH or a PDSCH located in the DL SB and a PDCCH or a PDSCH located in the DL only time domain unit.

Optionally, the terminal performs receiving by using the spatial domain parameter, and the spatial domain parameter is applied to a PDCCH or a PDSCH that is located in the DL SB and that overlaps an RO (for example, a valid RO), and a PDCCH or a PDSCH that is located in the DL only time domain unit and that overlaps an RO (for example, a valid RO).

In this embodiment, the PDCCH carries MSG2, MSGB, or MSG4, and the PDSCH carries MSG2, MSGB, or MSG4.

Optionally, the network side device may configure a group of spatial domain parameters for the UE to use a corresponding spatial domain parameter when uplink transmission (for example, a valid RO) overlaps different SSBs or common control channels in the time domain.

For example, spatialRelationInfo of corresponding UL transmission is configured for each SSB index (index), as shown in Table 2:

**Table 2**

| | Configured SSB index-spatialRelationInfo association relationship | | | | Explanation |
|---|---|---|---|---|---|
| SSB index overlapping, in the time domain, a UL transmission located in a UL SB | SSB index i+1 | SSB index i+2 | ... | SSB index i+n | SSB overlapping the UL transmission in the time domain |
| Spatial parameter used for UL transmission in the UL SB | spatialRelationInfo k1 | spatialRelationInfo k2 | ... | spatialRelationInfo kn | Configure a UL transmission parameter to reduce SI and CLI |

spatialRelationInfo k1, k2, ..., and kn are respectively quasi-orthogonal to spatial domain directions of SSB indexes i+1, i+2, ..., and i+n, to reduce the self-interference and the CLI.

For example, for a terminal, when MSG1 information transmission overlaps an SSB index i+1 in the time domain, spatialRelationInfo k1 is used; when MSG3 transmission (namely, transmission of a PUSCH that carries MSG3) overlaps an SSB index i+2 in the time domain, spatialRelationInfo k2 is used; when CG based SDT transmission (namely, transmission of a PUSCH that carries small data) overlaps an SSB index i+n in the time domain, spatialRelationInfo kn is used; and so on.

Optionally, the network may configure a group of spatial domain parameters for the UE to use a corresponding spatial domain parameters (TCI state) when downlink transmission overlaps uplink transmission (for example, an RO) associated with different SSBs or common control channels in the time domain.

For example, a TCI state of corresponding DL transmission is configured per SSB index (per SSB index), as shown in Table 3:

**Table 3**

| | Configured UL transmission-TCI state association relationship | | | | Explanation |
|---|---|---|---|---|---|
| UL transmission associated with an SSB index i | UL transmission associated with an SSB index i+3 | UL transmission associated with an SSB index i+4 | ... | UL transmission associated with SSB index i+n-2 | Overlap, in the time domain, UL transmission associated with an SSB |
| Transmission of a PDCCH of MSG2/MSGB/MSG4 and/or receiving of a PDSCH of MSG2/MSGB/MSG4 | TCI state j1 | TCI state j2 | ... | TCI state jn | Configure a DL transmission parameter to reduce SI and CLI |

TCI states j1, j2, ..., and jn are quasi-orthogonal to spatial domain directions of UL transmission associated with SSB indexes i+3, i+4, ..., and i+n-2, thereby reducing self-interference and CLI.

For example, for a terminal, when receiving of a PDCCH/PDSCH of MSG2 overlaps, in the time domain, UL transmission associated with the SSB index i+3, the UL transmission associated with the SSB index i+3 uses a TCI state i+3, and receiving of MSG2 uses the TCI state j1; when receiving of a PDCCH of MSG4 overlaps, in the time domain, UL transmission associated with the SSB index i+4, the UL transmission associated with the SSB index i+4 uses a TCI state i+4, and the PDCCH of MSG4 uses the TCI state j2; when receiving of a PDSCH of MSG4 overlaps, in the time domain, UL transmission associated with the SSB index i+n, if UL transmission associated with the SSB index i+4 uses the TCI state i+n-2, a PDSCH of MSG4 uses the TCI state jn; and so on.

Optionally, in this embodiment, the network side device configures only a spatial domain parameter of UL transmission located in the UL SB, or configures only a spatial domain parameter of DL receiving located in the DL SB, or configures both a spatial domain parameter of UL transmission located in the UL SB and a spatial domain parameter of DL receiving located in the DL SB.

When only the spatial domain parameter of UL transmission located in the UL SB is configured, or only the spatial domain parameter of DL receiving located in the DL SB is configured, the SI and the CLI can be reduced.

When both the spatial domain parameter of UL transmission located in the UL SB and the spatial domain parameter of DL receiving located in the DL SB are configured, that is, the network configures both the spatial domain parameter of UL transmission located in UL SB and the spatial domain parameter of DL receiving located in the DL SB, these two spatial domain parameters need to have strong orthogonality or have a weak QCL relationship, thereby ensuring relatively small SI and CLI, which is shown in Table 4:

**Table 4**

| | Configured UL transmission-TCI state association relationship | | | | Explanation |
|---|---|---|---|---|---|
| Spatial domain parameter that is of UL transmission associated with an SSB index i and that is configured by a network | Spatial domain parameter m+3 of UL transmission associated with an SSB index i+3 | Spatial domain parameter m+4 of UL transmission associated with an SSB index i+4 | ... | Spatial domain parameter m+n-2 of UL transmission associated with an SSB index i+n-2 | Overlap, in the time domain, UL transmission associated with an SSB |
| Transmission of a PDCCH of MSG2/MSGB/MSG4 and/or receiving of a PDSCH of MSG2/MSGB/MSG4 | TCI state d1 | TCI state d2 | ... | TCI state dn | Configure a DL transmission parameter to reduce SI and CLI |

Optionally, the network side device may configure {UL spatial domain parameter, DL spatial domain parameter} to represent an association relationship between UL sending and DL receiving, for example, which is shown in Table 5:

**Table 5**

| SSB index | {UL spatial domain parameter, DL spatial domain parameter} |
|---|---|
| SSB index i+1 | {k1, j1} |
| SSB index i+2 | {k2, j2} |
| ... | |
| SSB index i+n | {kn, jn} |

The UL spatial domain parameter is a spatial domain parameter used for uplink transmission associated with an SSB, may be a spatial domain parameter used for sending a PUSCH of MSG1/MSGA/MSG3/CG based SDT/Msg4 HARQ-ACK PUCCH/successRAR/MSG5. In one manner, the spatial domain parameter may be a spatial domain parameter used by an RO associated with the SSB or a valid RO.

The DL spatial domain parameter is a spatial domain parameter used for downlink transmission corresponding to uplink transmission associated with the SSB, may be a spatial domain parameter used for receiving a PDCCH of MSG2/MSGB/MSG4 or a PDSCH of MSG2/MSGB/MSG4.

The spatial domain parameters kn and jn may be different from the spatial domain parameters represented by the SSB index i+n, to suppress the SI and the CLI.

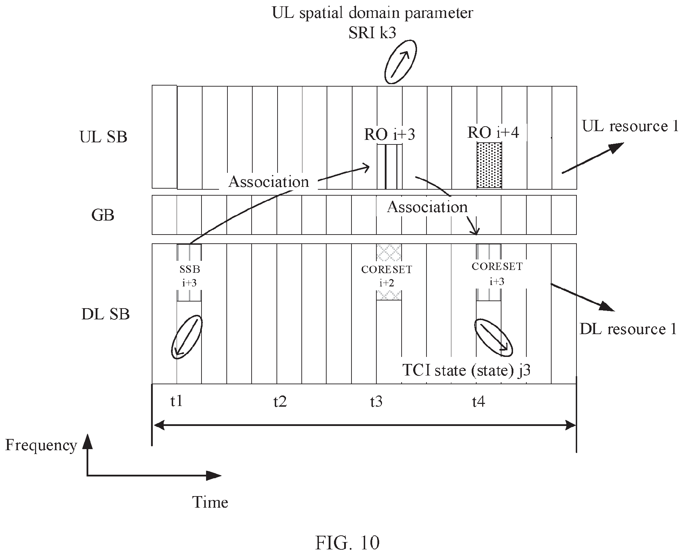

For example, as shown in FIG. 10, if the network side device configures {UL spatial domain parameter, DL spatial domain parameter} of the SSB index i+3, the terminal sends the RO i+3 (a time-frequency resource of a UE preamble is located in the RO) that is located in the UL SB and that is associated with the SSB index i+3, and uses the configured UL spatial domain parameter (SRI k3) corresponding to the SSB index i+3. The terminal receives a CORESET i+3 that is located in the DL SB and that corresponds to the RO i+3, and uses the configured DL spatial domain parameter (TCI state j3) corresponding to the SSB index i+3. A spatial domain parameter for transmitting the RO i+3 needs to be quasi-orthogonal to a spatial domain parameter of a CORESET i+2, and a spatial domain parameter for receiving the CORESET i+3 needs to be quasi-orthogonal to a spatial domain parameter of the RO i+4, to ensure relatively low SI or CLI.

The following describes use of the spatial domain parameter in this embodiment of this application with reference to a specific scenario.

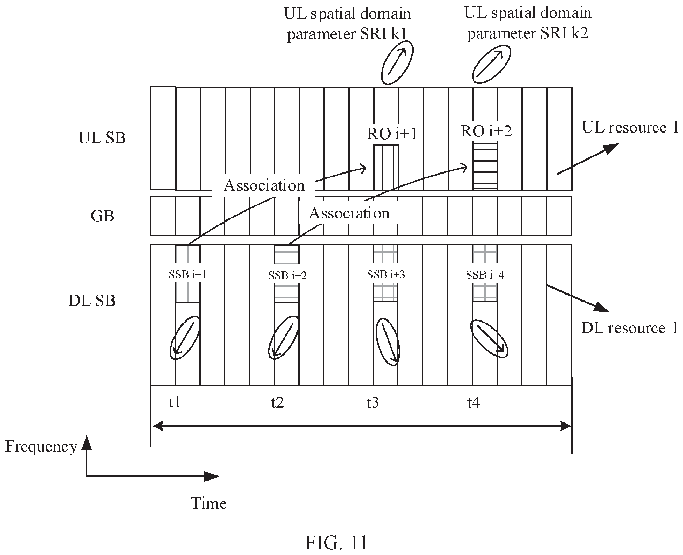

Example 1: As shown in FIG. 11, for the RO i+1 and the RO i+2 that are valid, the RO i+1 is associated with the SSB i+1, the RO i+2 is associated with the SSB i+2, the RO i+1 overlaps the SSB i+3 in the time domain, and the RO i+2 overlaps the SSB i+4 in the time domain.

Downlink sending of the SSB i+3 on the network side may produce self-interference to uplink receiving of a preamble sent by the UE on the RO i+1. In addition, sending the preamble on the RO i+1 by the UE produces CLI to receiving the SSB i+3 by another UE. Therefore, the network may indicate the spatial domain parameter (SRI k1) of the UE that sends the preamble on the RO i+1, and the spatial domain parameter is orthogonal (quasi-orthogonal) to the SSB i+3, thereby reducing self-interference and CLI.

Herein, the SSB may represent a DL spatial domain parameter, for example, a TCI state i+1, and the configured UL spatial domain parameter SRI k1 may be different from a direction of the TCI state i+1, thereby suppressing spatial domain self-interference and CLI.

It should be noted that if the TCI state i+1 represented by the SSB i+1 and the TCI state i+3 represented by the SSB i+3 have good quasi-orthogonality, the configured UL spatial domain parameter may be equal to the spatial domain parameter represented by the SSB i+1.

That UL Tx Spatial domain filter is the same as the DL TCI state (which may be understood as that the UL spatial domain parameter is the same as the DL spatial domain parameter) means that the UE receives a signal or channel sent by the base station, and sends a UL signal or channel to the base station in a reverse direction.

If the RO i+1 associated with the SSB i+1 is located in the UL only time domain unit, a beam (beam) used by the UE to send the preamble on the RO i+1 may be based on an implementation (a beam determined by the UE), or may be specified by a protocol or configured by the network, for example, the TCI state i+1 or a spatial domain parameter k1 of the SSB i+1.

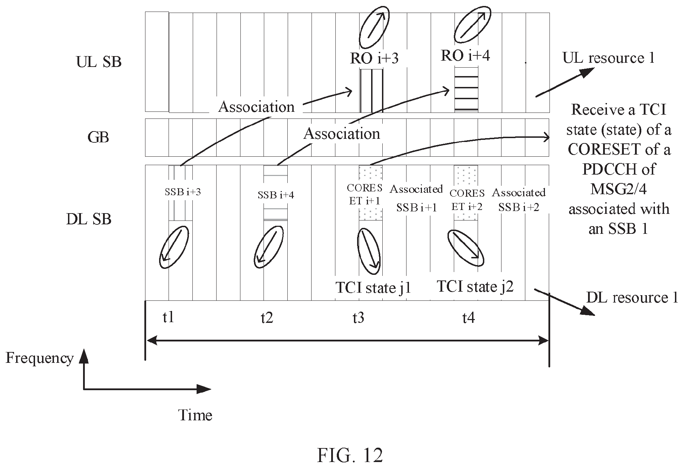

Example 2: As shown in FIG. 12, downlink sending of the network on the CORESET i+1 (associated with the SSB i+1) produces self-interference to uplink sending of the preamble sent by the UE on the RO i+3 (associated with the SSB i+3). In addition, sending the preamble on the RO i+3 by the UE produces CLI to receiving a PDCCH of the CORESET i+1 by another UE. Therefore, the network may indicate the spatial domain parameter (TCI state j1) of the UE that receives the PDCCH on the CORESET i+1, and the spatial domain parameter is orthogonal (quasi-orthogonal) to the spatial domain parameter used for sending the preamble on the RO i+3 (associated with the SSB i+3), thereby reducing self-interference and CLI.

The CORESET i+1 associated with the SSB i+1 may use the same TCI state i+1 as the SSB i+1, and the configured DL spatial domain parameter TCI state j1 may be different from the direction of the TCI state i+1, thereby suppressing spatial self-interference and CLI.

It should be noted that if the TCI state i+1 represented by the SSB i+1 has good quasi-orthogonality with a spatial domain parameter (represented as the same Tx spatial domain filter as the TCI state i+3) of an RO associated with the SSB i+3, the spatial domain parameter TCI state j1 may use the same spatial domain parameter of SSB i+1.

Optionally, if the CORESET i+1 associated with the SSB i+1 is located in the DL only time domain unit, the TCI state (beam direction) used by the UE to receive, on the CORESET i+1, the PDSCH scheduled by the PDCCH and the PDSCH may be implemented based on an implementation (beam determined by the UE), or may be specified by a protocol or configured by a network, for example, the TCI state i+1 or the TCI state j1 of the SSB i+1.

In this embodiment of this application, for a time window (a mapping cycle, an association period, and an association pattern period), a sequence of SSB-to-RO mapping may be configured by the network or predefined. For example, SS/PBCH block indexes can be mapped to valid ROs in the following order:
1. in ascending order of preamble indexes of preambles in each valid RO;
2. in ascending order of frequency domain indexes when RACH FDM is configured (that is, there are a plurality of valid ROs in the frequency domain);
3. in ascending order of indexes in the PRACH slot when a plurality of valid ROs are configured in the PRACH slot; and
4. in ascending order of PRACH slot indexes when a plurality of PRACH slots are configured.

In this embodiment of this application, in a mapping cycle, an association period, and an association pattern period, the SSB-to-RO mapping is determined based on an uplink-downlink configuration, an enhanced duplex configuration, a UL SB determined in the enhanced duplex mode period, and the valid RO in the UL time domain unit.

The RO located in the UL SB and the RO located in the UL only time domain unit are separately configured.

Optionally, the SSB-to-RO mapping includes:
all SSBs are mapped to two types of ROs;
all SSBs are mapped to the RO in the UL SB; and
all SSBs are mapped to the RO located in the UL time domain unit.

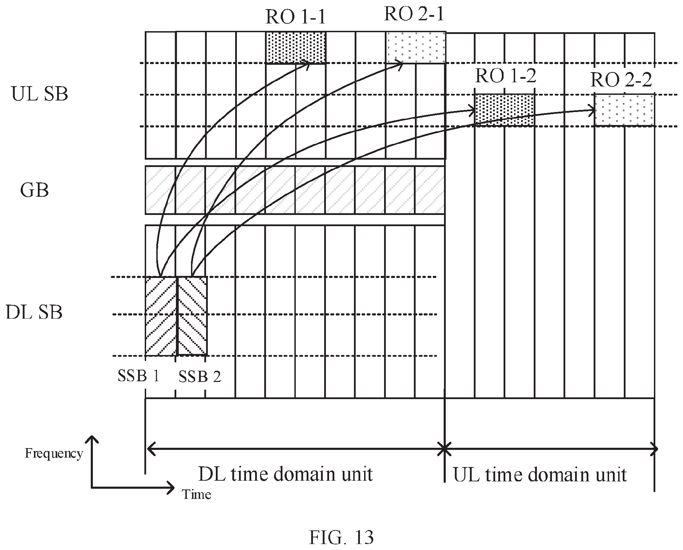

For example, as shown in FIG. 13, an SSB 1 is mapped to an RO 1-1 located in the UL SB (UL SB in a UL symbol) and an RO 1-2 located in the UL time domain unit (UL only symbol); an SSB 2 is mapped to an RO 2-1 located in the UL SB (UL SB in the UL time domain unit) and an RO 2-2 located in the UL time domain unit (UL only symbol).

One PRACH configuration includes the RO of the UL SB and the RO of the UL time domain unit (configured with no SB). One SSB is mapped to at least one of the RO of the UL SB and the RO of the UL time domain unit.

Optionally, at least all SSBs can be mapped to ROs of all UL time domain units.

In this embodiment of this application, SSB-to-RO mapping may be classified into more types.

For a network and a terminal that support SBFD, there are usually four types of time domain units (a symbol or a slot), including a DL time domain unit (configured with no SB), a DL time domain unit configured with a UL SB, a UL time domain unit configured with a DL SB, and a UL time domain unit (configured with no SB).

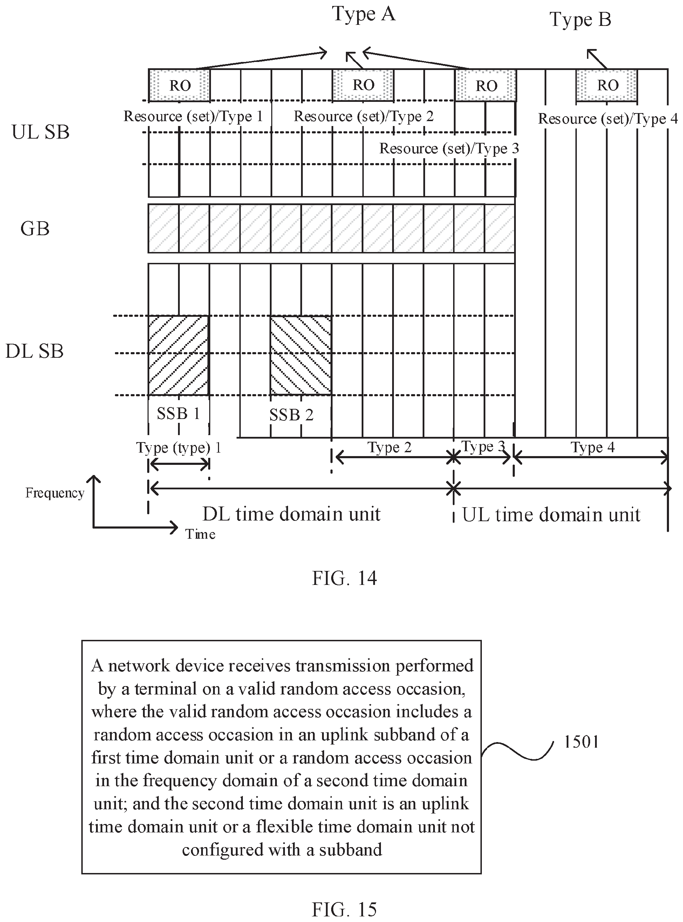

As shown in FIG. 14, for a configured RO resource (set) (PRACH occasions Physical random access channel occasions), there may be two types of configuration cases:
Case 1: The RO resource (set) is configured in one UL subband (may be in a UL symbol, or may be in a DL or flexible symbol), for example, Type A.
Case 2: An RO resource (set) is configured in one UL time domain unit (configured with no DL subband), for example, Type B.

Further, the configured RO resource (set) may be further divided based on whether there is overlapping with an SSB in the time domain:
(1) Configured RO resource (set)/Type 1: The RO resource (set) is configured in a UL SB in a DL symbol with an SSB or a common DL channel, that is, overlaps the SSB or the common DL channel in the time domain. In this case, uplink sending of one UE interferes with receiving of an SSB of another UE, which is cross-link interference. If the UE measures or decodes the common DL channel by using the SSB, there is also self-interference.
(2) Configured RO resource (set)/Type 2: The RO resource (set) is configured in a UL SB in a DL symbol without an SSB or a common DL channel, that is, does not overlap the SSB/common DL channel in the time domain. In this case, uplink sending of one UE interferes with receiving of a DL channel or signal of another UE, that is, a PDCCH, a PDSCH, a CSI-RS, and the like.
(3) Configured RO resource (set)/Type 3: The RO resource (set) is configured in the UL SB of one UL symbol. An interference case is similar to that of Type 2.
(4) Configured RO resource (set)/Type 4: The RO resource (set) is configured in a UL symbol. In this case, there is no cross-link interference.

If an SS-RSRP of an SSB is greater than rsrp-ThresholdSSB, an SSB greater than rsrp-ThresholdSSB is selected. Otherwise, any SSB (SS-RSRPs of a plurality of SSBs are greater than rsrp-ThresholdSSB) is selected.

When a CSI-RS is selected, a CSI-RSRP of the CSI-RS is compared with the parameter rsrp-ThresholdSSB. If a CSI-RSRP of a CSI-RS is greater than rsrp-ThresholdCSI-RS, a CSI-RS whose CSI-RSRP is greater than rsrp-ThresholdCSI-RS is selected.

Whether the flexible time domain unit is a valid resource for UL transmission may be based on the following rule:
(1) Flexible time domain unit configured with no UL and DL directions:
   The network may configure the time domain unit as a resource for valid UL transmission (for example, an RO).
(2) Flexible time domain unit configured with a UL SB:
   The network may configure the UL SB of the time domain unit as a resource for valid UL transmissions (for example, an RO).
(3) Flexible time domain unit configured with a DL SB:
   The network may configure a resource other than the DL SB and a GB of the time domain unit as a resource for valid UL transmission (for example, an RO).

UL transmission (for example, an RO) overlapping the GB in the frequency domain is an invalid resource.

Optionally, RO types may be classified based on a preamble format (format) configured in the RO (for example, preamble formats with different lengths), one RO resource may be associated with one preamble format, and the RO may occupy at least one symbol or slot. One SSB may be associated with at least one type of RO, and different ROs may include different preamble formats.

A method for selecting different ROs may be based on a threshold (threshold) of received signal strength configured by the network. For example, the network configures two thresholds per SSB, a threshold A and a threshold B.

For example, the UE first measures an RSRP X of the SSB. If the measured RSRP X of the SSB is greater than or equal to the threshold A, the UE selects an RO type A associated with the SSB to perform random access, and the RO type may be associated with a short preamble format. If an RSRP X of an SSB is measured and a threshold is B≤x<threshold A, the UE selects the SSB to be associated with the RO type B, and the RO type is associated with a long preamble format.

In addition, the network may provide configuration or a rule is predefined. If only one associated RO type is configured for one SSB, the UE may select an SSB based on an RO type. For example, if only an RO type associated with a short preamble format is configured for an SSB i, the UE learns through measurement that an RSRP X of the SSB i is threshold B≤X<threshold A, and the UE has no available long preamble format, the UE does not camp on the SSB. The UE selects another SSB to apply the foregoing rule, so that the UE can obtain better coverage performance by using the long preamble format.

The method in this embodiment of this application may be applied to SDT, and SRS transmission before random access is performed, which is not limited herein.

In conclusion, the method in this embodiment of this application reduces self-interference and cross-link interference, provides resource utilization, reduces an access delay, and improves coverage.

As shown in FIG. 15, a transmission processing method in an embodiment of this application includes:
Step 1501: A network device receives transmission performed by a terminal on a valid random access occasion, where the valid random access occasion includes a random access occasion in an uplink subband of a first time domain unit or a random access occasion in the frequency domain of a second time domain unit.

The second time domain unit is an uplink time domain unit or a flexible time domain unit not configured with a subband.

Optionally, the valid random access occasion is a random access occasion that conforms to a specific rule; and
the rule includes one of the following:
the valid random access occasion is located in the uplink subband of the first time domain unit; or
in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is greater than or equal to a fourth value.

Optionally, the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

Optionally, the first information is a time division duplexing uplink-downlink common configuration.

Optionally, the first value and the second value are equal to a value of an interval N_{gap} symbols.

Optionally, the method further includes:
the network side device sends configuration information of a random access occasion, where
in the configuration information, a first configuration and a second configuration are the same configuration, or the first configuration and the second configuration are separate configurations;
the first configuration is a configuration of a random access occasion located in the uplink subband of the first time domain unit; and
the second configuration is a configuration of a random access occasion located in the frequency domain of the second time domain unit.

Optionally, the method further includes:
the network side device sends a spatial domain parameter; and
that the network device receives transmission performed by a terminal on a valid random access occasion includes:
   the network device receives at least one of the following sent by the terminal on the valid random access occasion based on the spatial domain parameter:
   a first message in a 2-step random access procedure;
   a first message in a 4-step random access procedure;
   a third message in the 4-step random access procedure;
   a configured grant based small data transmission;
   a common physical uplink control channel PUCCH used to acknowledge a fourth message in the 4-step random access procedure; and
   a random access success response message.

According to the method in this embodiment of this application, the network side device receives transmission performed by the terminal on the valid random access occasion. The valid random access occasion is a random access occasion in the uplink subband of the first time domain unit or the random access occasion in the frequency domain of the second time domain unit (an uplink time domain unit not configured with a subband), thereby avoiding self-interference and cross-link interference, improving system performance, and reducing an access delay.

It should be noted that the method is implemented in cooperation with the terminal that performs the method shown in FIG. 6. An implementation of the foregoing method embodiment is applicable to the method, and same technical effects can also be achieved.

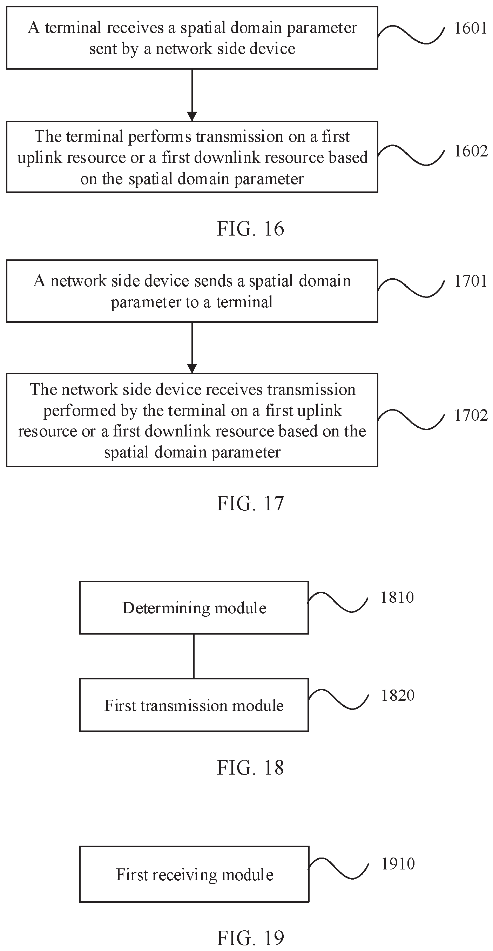

As shown in FIG. 16, an embodiment of this application provides a transmission configuration method, including:
Step 1601: A terminal receives a spatial domain parameter sent by a network side device.
Step 1602: The terminal performs transmission on a first uplink resource or a first downlink resource based on the spatial domain parameter.

The first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

In this way, the terminal can transmit the first uplink resource or the first downlink resource based on a spatial domain parameter indicated by a network, thereby avoiding self-interference and cross-link interference, improving system performance, and reducing an access delay.

The sixth time domain unit may be an uplink time domain unit, or may be a downlink time domain unit, or may be a flexible time domain unit. The seventh time domain unit is a UL only time domain unit.

The eighth time domain unit may be an uplink time domain unit, or may be a downlink time domain unit, or may be a flexible time domain unit. The ninth time domain unit is a UL only time domain unit.

Optionally, the first uplink resource may be an RO, especially a valid RO.

Optionally, the first downlink resource may be an SSB, a common control channel, or the like.

Optionally, the first uplink resource is a resource that overlaps an SSB or a common control channel transmission in the time domain in the uplink subband of the sixth time domain unit; and
the first downlink resource is a resource that overlaps an uplink transmission in the time domain in the downlink subband of the eighth time domain unit.

The uplink transmission may be understood as sending an RO or MSG1/MSGA/MSG3/CG based SDT/Msg4 HARQ-ACK PUCCH/successRAR/MSG5 PUSCH on an RO.

Optionally, the spatial domain parameter includes at least one of the following:
spatial domain parameters corresponding to different SSBs or common control channels; and
spatial domain parameters corresponding to different uplink transmission, where the uplink transmission is associated with an SSB.

Optionally, the spatial domain parameters corresponding to the different SSBs include at least one of the following:
a spatial domain parameter used for uplink transmission associated with an SSB; and
a spatial domain parameter used for downlink transmission corresponding to the uplink transmission associated with an SSB.

In this way, if the network side device configures the spatial domain parameters corresponding to the different SSBs or common control channels, and the spatial domain parameter is used for uplink transmission associated with an SSB, an RO, in particular a valid RO, located in the UL SB or the UL only time domain unit may be transmitted by using a spatial domain parameter corresponding to an SSB associated with the RO resource. Alternatively, in a case in which the RO overlaps the SSB or the common control channel, a spatial domain parameter corresponding to the SSB associated with the RO is used for transmission.

If the network side device configures the spatial domain parameters corresponding to the different SSBs or common control channels, and the spatial domain parameter is used for downlink transmission corresponding to uplink transmission associated with the SSB, for the RO, especially the valid RO, when downlink transmission corresponding to the RO is sent, a spatial domain parameter that is of the SSB associated with the downlink transmission and that is configured by the network side device may be used.

When the network side device sends the spatial domain parameters corresponding to the different uplink transmission, the spatial domain parameter is used by the terminal to receive downlink transmission, so that when downlink transmission overlaps uplink transmission, a spatial domain parameter used for downlink transmission is determined.

Optionally, the spatial domain parameter includes a transmission configuration indicator TCI state or spatial relation information.

Specifically, Specifically, the network side device indicates the spatial domain parameter in semi-static signaling (for example, an SIB message or an RRC release message) or dynamic signaling.

Optionally, the terminal performs sending by using the spatial domain parameter. The spatial domain parameter is applied to uplink transmission located in the UL SB, for example, an RO or a valid RO.

Optionally, the terminal performs sending by using the spatial domain parameter. The spatial domain parameter is applied to uplink transmission that is located in the UL SB and that overlaps an SSB or a common control channel, for example, an RO or a valid RO.

Optionally, the terminal performs sending by using the spatial domain parameter. The spatial domain parameter is applied to uplink transmission located in the UL SB and an RO located in the UL only time domain unit, for example, an RO or a valid RO.

Optionally, the terminal performs sending by using the spatial domain parameter. The spatial domain parameter is applied to uplink transmission that is located in the UL SB and that overlaps an SSB or a common control channel, for example, an RO or a valid RO, and uplink transmission that is located in the UL only time domain unit and that overlaps an SSB or a common control channel, for example, an RO or a valid RO.

Optionally, the terminal performs receiving by using the spatial domain parameter, and the spatial domain parameter is applied to a PDCCH or a PDSCH located in the DL SB.

Optionally, the terminal performs receiving by using the spatial domain parameter, and the spatial domain parameter is applied to a PDCCH or a PDSCH that is located in a DL SB and that overlaps uplink transmission (for example, an RO or a valid RO).

Optionally, the terminal performs receiving by using the spatial domain parameter, and the spatial domain parameter is applied to a PDCCH or a PDSCH located in the DL SB and a PDCCH or a PDSCH located in the DL only time domain unit.

Optionally, the terminal performs receiving by using the spatial domain parameter, and the spatial domain parameter is applied to a PDCCH or a PDSCH that is located in the DL SB and that overlaps uplink transmission (for example, an RO or a valid RO), and a PDCCH or a PDSCH that is located in the DL only time domain unit and that overlaps uplink transmission (for example, an RO or a valid RO).

Optionally, the uplink resource includes a valid random access occasion.

Optionally, the valid RO is in the random access occasions configured by the network side device after the terminal obtains the configuration from the network side device or the predefined rule, and the valid RO is determined based on the rule.

The rule includes one of the following:
the valid random access occasion is located in the uplink subband of the first time domain unit; or
in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is greater than or equal to a fourth value.

Optionally, the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

Optionally, the first information is a time division duplexing uplink-downlink common configuration. Optionally, the first value and the second value are equal to a value of an interval N_{gap} symbols.

It should be noted that an implementation of the spatial domain parameter part in the transmission processing method in the foregoing embodiments is applicable to the transmission configuration method in the embodiments of this application, and same technical effects can also be achieved.

As described in FIG. 17, a transmission configuration method in an embodiment of this application includes:
Step 1701: A network side device sends a spatial domain parameter to a terminal.
Step 1702: The network side device receives transmission performed by the terminal on a first uplink resource or a first downlink resource based on the spatial domain parameter.

The first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

Optionally, the first uplink resource is a resource that overlaps an SSB or a common control channel transmission in the time domain in the uplink subband of the sixth time domain unit; and
the first downlink resource is a resource that overlaps an uplink transmission in the time domain in the downlink subband of the eighth time domain unit.

Optionally, the spatial domain parameter includes at least one of the following:
spatial domain parameters corresponding to different SSBs or common control channels; and
spatial domain parameters corresponding to different uplink transmission, where the uplink transmission is associated with an SSB.

Optionally, the spatial domain parameters corresponding to the different SSBs include at least one of the following:
a spatial domain parameter used for uplink transmission associated with an SSB; and
a spatial domain parameter used for downlink transmission corresponding to the uplink transmission associated with an SSB.

Optionally, the spatial domain parameter includes a transmission configuration indicator TCI state or spatial relation information.

Optionally, the uplink resource includes a valid random access occasion.

According to the method in this embodiment of this application, the network side device indicates the spatial domain parameter of the first uplink resource or the first downlink resource to the terminal, so that the terminal performs uplink/downlink transmission based on the indicated spatial domain parameter, thereby avoiding self-interference and cross-link interference, improving system performance, and reducing an access delay.

It should be noted that the method is implemented in cooperation with the method in FIG. 16 performed by the terminal. An implementation of the foregoing method embodiment is applicable to the method, and same technical effects can also be achieved.

The transmission processing method provided in the embodiments of this application may be performed by a transmission processing apparatus. In the embodiments of this application, the transmission processing apparatus provided in the embodiments of this application is described by using an example in which the transmission processing apparatus performs the transmission processing method.

As shown in FIG. 18, a transmission processing apparatus provided in an embodiment of this application includes:
a determining module 1810, configured to determine a valid random access occasion, where the valid random access occasion includes a random access occasion in an uplink subband of a first time domain unit or a random access occasion in the frequency domain of a second time domain unit, and the second time domain unit is an uplink time domain unit or a flexible time domain unit not configured with a subband; and
a first transmission module 1820, configured to perform transmission on the valid random access occasion.

Optionally, the determining module includes:
an obtaining submodule, configured to obtain a configuration from a network side device or a predefined rule; and
a determining submodule, configured to the valid random access occasion based on the rule in random access occasions configured by the network side device, where
the rule includes one of the following:
   the valid random access occasion is located in the uplink subband of the first time domain unit; or
   in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
   the valid random access occasion is located in the uplink subband of the first time domain unit, and an interval between the valid random access occasion in a random access slot and a fourth time domain unit is greater than or equal to a third value; and
   the valid random access occasion is located in the uplink subband of the first time domain unit, and an interval between the valid random access occasion in the random access slot and a fifth time domain unit is greater than or equal to a fourth value.

Optionally, the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

Optionally, the first information is a time division duplexing uplink-downlink common configuration.

Optionally, the determining submodule is further configured to:
in a case in which the time division duplexing uplink-downlink common configuration is received, determine, by the terminal, that a random access occasion, in a random access slot, that is located in the uplink subband of the first time domain unit and that has an interval greater than or equal to the third value from the fourth time domain unit is the valid random access occasion.

Optionally, the first value and the second value are equal to a value of an interval N_{gap} symbols.

Optionally, the apparatus further includes:
a fourth receiving module, configured to receive configuration information that is of a random access occasion and that is sent by the network side device, where
in the configuration information, a first configuration and a second configuration are the same configuration, or the first configuration and the second configuration are separate configurations;
the first configuration is a configuration of a random access occasion located in the uplink subband of the first time domain unit; and
the second configuration is a configuration of a random access occasion located in the frequency domain of the second time domain unit.

Optionally, the first transmission module is further configured to:
receive a spatial domain parameter sent by the network side device; and
send at least one of the following on the valid random access occasion based on the spatial domain parameter:
   a first message in a 2-step random access procedure;
   a first message in a 4-step random access procedure;
   a third message in the 4-step random access procedure;
   a configured grant based small data transmission;
   a common physical uplink control channel PUCCH used to acknowledge a fourth message in the 4-step random access procedure; and
   a random access success response message.

It should be noted that the apparatus is an apparatus that applies the foregoing transmission processing method performed by the terminal.

The transmission processing apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The transmission processing apparatus provided in this embodiment of this application can implement the processes implemented in the method embodiments of FIG. 6 to FIG. 14, and achieve same technical effects. To avoid repetition, details are not described herein again.

As shown in FIG. 19, a transmission processing apparatus provided in an embodiment of this application includes:
a first receiving module 1910, configured to receive transmission performed by a terminal on a valid random access occasion, where the valid random access occasion includes a random access occasion in an uplink subband of a first time domain unit or a random access occasion in the frequency domain of a second time domain unit; and
the second time domain unit is an uplink time domain unit or a flexible time domain unit not configured with a subband.

Optionally, the valid random access occasion is a random access occasion that conforms to a specific rule; and
the rule includes one of the following:
the valid random access occasion is located in the uplink subband of the first time domain unit; or
in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is greater than or equal to a fourth value.

Optionally, the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

Optionally, the first information is a time division duplexing uplink-downlink common configuration.

Optionally, the first value and the second value are equal to a value of an interval N_{gap} symbols.

Optionally, the apparatus further includes:
a second sending module, configured to send configuration information of a random access occasion, where
in the configuration information, a first configuration and a second configuration are the same configuration, or the first configuration and the second configuration are separate configurations;
the first configuration is a configuration of a random access occasion located in the uplink subband of the first time domain unit; and
the second configuration is a configuration of a random access occasion located in the frequency domain of the second time domain unit.

Optionally, the apparatus further includes:
a third sending module, configured to send a spatial domain parameter; and
that the fifth receiving module is configured to receive transmission performed by the terminal on the valid random access occasion includes:
   the network device receives at least one of the following sent by the terminal on the valid random access occasion based on the spatial domain parameter:
   a first message in a 2-step random access procedure;
   a first message in a 4-step random access procedure;
   a third message in the 4-step random access procedure;
   a configured grant based small data transmission;
   a common physical uplink control channel PUCCH used to acknowledge a fourth message in the 4-step random access procedure; and
   a random access success response message.

It should be noted that the apparatus is an apparatus that applies the foregoing transmission processing method performed by the network side device.

The transmission processing apparatus provided in this embodiment of this application can implement the processes implemented in the method embodiments of FIG. 15, and achieve same technical effects. To avoid repetition, details are not described herein again.

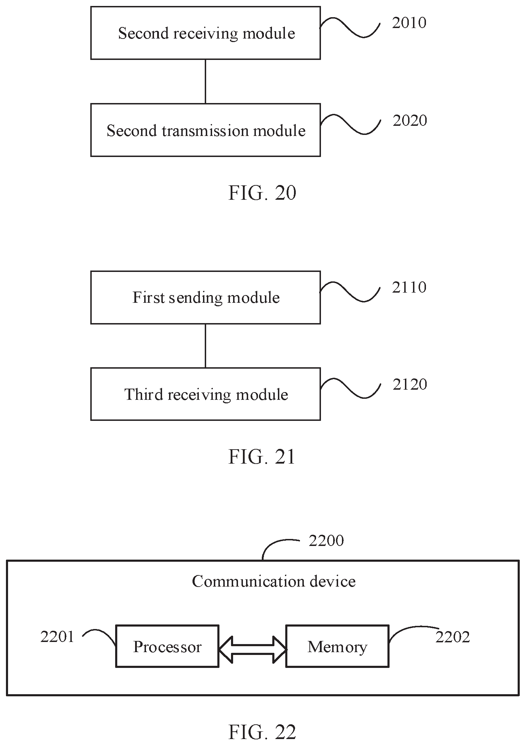

As shown in FIG. 20, a transmission configuration apparatus provided in an embodiment of this application includes:
a second receiving module 2010, configured to receive a spatial domain parameter sent by a network side device; and
a second transmission module 2020, configured to perform transmission on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

Optionally, the first uplink resource is a resource that overlaps an SSB or a common control channel transmission in the time domain in the uplink subband of the sixth time domain unit; and
the first downlink resource is a resource that overlaps an uplink transmission in the time domain in the downlink subband of the eighth time domain unit.

Optionally, the spatial domain parameter includes at least one of the following:
spatial domain parameters corresponding to different SSBs or common control channels; and
spatial domain parameters corresponding to different uplink transmission, where the uplink transmission is associated with an SSB.

Optionally, the spatial domain parameters corresponding to the different SSBs include at least one of the following:
a spatial domain parameter used for uplink transmission associated with an SSB; and
a spatial domain parameter used for downlink transmission corresponding to the uplink transmission associated with an SSB.

Optionally, the spatial domain parameter includes a transmission configuration indicator TCI state or spatial relation information.

Optionally, the uplink resource includes a valid random access occasion.

It should be noted that the apparatus is an apparatus that applies the foregoing transmission configuration method performed by the terminal.

The transmission processing apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The transmission configuration apparatus provided in this embodiment of this application can implement the processes implemented in the method embodiments of FIG. 16, and achieve same technical effects. To avoid repetition, details are not described herein again.

As shown in FIG. 21, a transmission configuration apparatus provided in an embodiment of this application includes:
a first sending module 2110, configured to send a spatial domain parameter to a terminal; and
a third receiving module 2120, configured to receive transmission performed by the terminal on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

Optionally, the first uplink resource is a resource that overlaps an SSB or a common control channel transmission in the time domain in the uplink subband of the sixth time domain unit; and
the first downlink resource is a resource that overlaps an uplink transmission in the time domain in the downlink subband of the eighth time domain unit.

Optionally, the spatial domain parameter includes at least one of the following:
spatial domain parameters corresponding to different SSBs or common control channels; and
spatial domain parameters corresponding to different uplink transmission, where the uplink transmission is associated with an SSB.

Optionally, the spatial domain parameters corresponding to the different SSBs include at least one of the following:
a spatial domain parameter used for uplink transmission associated with an SSB; and
a spatial domain parameter used for downlink transmission corresponding to the uplink transmission associated with an SSB.

Optionally, the spatial domain parameter includes a transmission configuration indicator TCI state or spatial relation information.

Optionally, the uplink resource includes a valid random access occasion.

It should be noted that the apparatus is an apparatus that applies the foregoing transmission configuration method performed by the network side device.

The transmission processing apparatus provided in this embodiment of this application can implement the processes implemented in the method embodiments of FIG. 17, and achieve same technical effects. To avoid repetition, details are not described herein again.

As shown in FIG. 22, an embodiment of this application further provides a communication device 2200, including a processor 2201 and a memory 2202. The memory 2202 stores a program or instructions capable of being run on the processor 2201. For example, when the communication device 2200 is a terminal, the program or instructions are executed by the processor 2201 to implement the foregoing transmission processing method performed by the terminal or steps of the transmission configuration method embodiment, and can achieve same technical effects. When the communication device 2200 is a network side device, the program or instructions are executed by the processor 2201 to implement steps in the foregoing transmission processing method performed by the network side device or the transmission configuration method embodiment, and same technical effects can be achieved. To avoid repetition, details are not described herein again.

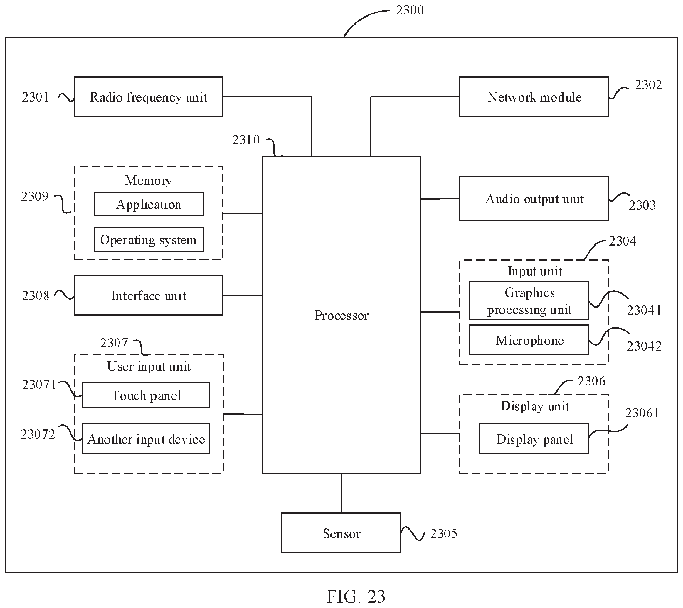

An embodiment of this application further provides a terminal, including a processor and a communication interface. The communication interface is coupled to the processor. The processor is configured to run a program or instructions to implement the steps in the method embodiment shown in FIG. 6 or FIG. 16. The terminal embodiment corresponds to the foregoing terminal side method embodiment. Each implementation process and implementation of the foregoing method embodiment may be applied to the terminal embodiment, and same technical effects can be achieved. Specifically, FIG. 23 is a schematic diagram of a hardware structure of a terminal for implementing an embodiment of this application.

The terminal 2300 includes but is not limited to at least some components in a radio frequency unit 2301, a network module 2302, an audio output unit 2303, an input unit 2304, a sensor 2305, a display unit 2306, a user input unit 2307, an interface unit 2308, a memory 2309, and a processor 2310.

A person skilled in the art may understand that the terminal 2300 may further include a power supply (for example, a battery) that supplies power to each component. The power supply may be logically connected to the processor 2310 through a power management system, to implement functions such as charging management, discharging management, and power consumption management through the power management system. The structure of the terminal shown in FIG. 23 does not constitute a limitation on the terminal. The terminal may include more or fewer components than those shown in the figure, or combine some components, or have different component arrangements. Details are not described herein again.

It should be understood that in this embodiment of this application, the input unit 2304 may include a graphics processing unit (Graphics Processing Unit, GPU) 23041 and a microphone 23042, and the graphics processing unit 23041 processes image data of a still picture or a video obtained by an image capture apparatus (for example, a camera) in a video capture mode or an image capture mode. The display unit 2306 may include a display panel 23061, and the display panel 23061 may be configured in a form of a liquid crystal display, an organic light-emitting diode, or the like. The user input unit 2307 includes at least one of a touch panel 23071 and another input device 23072. The touch panel 23071 is also referred to as a touchscreen. The touch panel 23071 may include two parts: a touch detection apparatus and a touch controller. The another input device 23072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 2301 may transmit the downlink data to the processor 2310 for processing. In addition, the radio frequency unit 2301 may send uplink data to the network side device. Generally, the radio frequency unit 2301 includes but is not limited to an antenna, an amplifier, a transceiver, a coupler, a low-noise amplifier, a duplexer, and the like.

The memory 2309 may be configured to store a software program or instructions and various types of data. The memory 2309 may mainly include a first storage area for storing a program or instructions and a second storage area for storing data. The first storage area may store an operating system, an application or instructions required by at least one function (for example, a sound playback function or an image playback function), and the like. In addition, the memory 2309 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 2309 in this embodiment of this application includes but is not limited to these memories and any other suitable type of memory.

The processor 2310 may include one or more processing units. Optionally, the processor 2310 integrates an application processor and a modem processor. The application processor mainly processes operations related to an operating system, a user interface, an application program, and the like. The modem processor, for example, a baseband processor, mainly processes a wireless communication signal. It may be understood that the foregoing modem processor may not be integrated into the processor 2310.

In a case in which the terminal executes the foregoing transmission processing method,
the processor 2310 is configured to determine a valid random access occasion, where the valid random access occasion includes a random access occasion in an uplink subband of a first time domain unit or a random access occasion in the frequency domain of a second time domain unit, and the second time domain unit is an uplink time domain unit or a flexible time domain unit not configured with a subband.

The radio frequency unit 2301 is configured to perform transmission on the valid random access occasion.

Optionally, the processor 2310 is configured to:
obtain a configuration from a network side device or a predefined rule; and
determine the valid random access occasion based on the rule in random access occasions configured by the network side device, where
the rule includes one of the following:
   the valid random access occasion is located in the uplink subband of the first time domain unit; or
   in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
   the valid random access occasion is located in the uplink subband of the first time domain unit, and an interval between the valid random access occasion in a random access slot and a fourth time domain unit is greater than or equal to a third value; and
   the valid random access occasion is located in the uplink subband of the first time domain unit, and an interval between the valid random access occasion in the random access slot and a fifth time domain unit is greater than or equal to a fourth value.

Optionally, the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

Optionally, the first information is a time division duplexing uplink-downlink common configuration.

Optionally, the radio frequency unit 2301 is configured to:
in a case in which the time division duplexing uplink-downlink common configuration is received, determine that a random access occasion, in a random access slot, that is located in the uplink subband of the first time domain unit and that has an interval greater than or equal to the third value from the fourth time domain unit is the valid random access occasion.

Optionally, the first value and the second value are equal to a value of an interval N_{gap} symbols.

Optionally, the radio frequency unit 2301 is configured to:
receive configuration information that is of a random access occasion and that is sent by the network side device, where
in the configuration information, a first configuration and a second configuration are the same configuration, or the first configuration and the second configuration are separate configurations;
the first configuration is a configuration of a random access occasion located in the uplink subband of the first time domain unit; and
the second configuration is a configuration of a random access occasion located in the frequency domain of the second time domain unit.

Optionally, the radio frequency unit 2301 is configured to:
receive a spatial domain parameter sent by the network side device; and
send at least one of the following on the valid random access occasion based on the spatial domain parameter:
   a first message in a 2-step random access procedure;
   a first message in a 4-step random access procedure;
   a third message in the 4-step random access procedure;
   a configured grant based small data transmission;
   a common physical uplink control channel PUCCH used to acknowledge a fourth message in the 4-step random access procedure; and
   a random access success response message.

In addition, in a case in which the terminal performs the foregoing transmission configuration method,
the radio frequency unit 2301 is configured to: receive a spatial domain parameter sent by a network side device; and
perform transmission on a first uplink resource or a first downlink resource based on the spatial domain parameter, where
the first uplink resource includes a resource in an uplink subband of a sixth time domain unit or a resource in a seventh time domain unit;
the first downlink resource includes a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

Optionally, the first uplink resource is a resource that overlaps an SSB or a common control channel transmission in the time domain in the uplink subband of the sixth time domain unit; and
the first downlink resource is a resource that overlaps an uplink transmission in the time domain in the downlink subband of the eighth time domain unit.

Optionally, the spatial domain parameter includes at least one of the following:
spatial domain parameters corresponding to different SSBs or common control channels; and
spatial domain parameters corresponding to different uplink transmission, where the uplink transmission is associated with an SSB.

Optionally, the spatial domain parameters corresponding to the different SSBs include at least one of the following:
a spatial domain parameter used for uplink transmission associated with an SSB; and
a spatial domain parameter used for downlink transmission corresponding to the uplink transmission associated with an SSB.

Optionally, the spatial domain parameter includes a transmission configuration indicator TCI state or spatial relation information.

Optionally, the uplink resource includes a valid random access occasion.

It may be understood that for implementation processes of the implementations mentioned in this embodiment, refer to related descriptions in the method embodiment, and same or corresponding technical effects are achieved. To avoid repetition, details are not described herein again.

An embodiment of this application further provides a network side device, including a processor and a communication interface. The communication interface is coupled to the processor. The processor is configured to run a program or instructions to implement the steps in the method embodiment shown in FIG. 15 or FIG. 17. The network side device embodiment corresponds to the foregoing network side device method embodiment. Each implementation process and implementation of the foregoing method embodiment may be applied to the embodiment of the network side device, and same technical effects can be achieved.

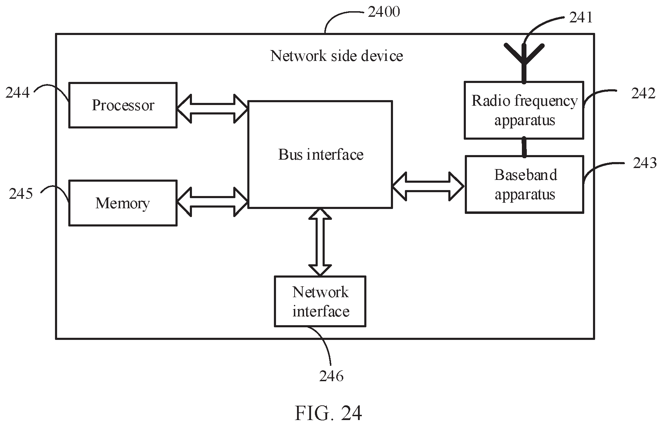

Specifically, an embodiment of this application further provides a network side device. As shown in FIG. 24, a network side device 2400 includes an antenna 241, a radio frequency apparatus 242, a baseband apparatus 243, a processor 244, and a memory 245. The antenna 241 is connected to the radio frequency apparatus 242. In an uplink direction, the radio frequency apparatus 242 receives information by using the antenna 241, and sends the received information to the baseband apparatus 243 for processing. In a downlink direction, the baseband apparatus 243 processes to-be-sent information, and sends the processed information to the radio frequency apparatus 242. After processing the received information, the radio frequency apparatus 242 sends the processed information by using the antenna 241.

The method performed by a network side device in the foregoing embodiment may be implemented in the baseband apparatus 243. The baseband apparatus 243 includes a baseband processor.

For example, the baseband apparatus 243 may include at least one baseband board. A plurality of chips are disposed on the baseband board. As shown in FIG. 24, one of the chips is, for example, the baseband processor, and is connected to the memory 245 by using a bus interface, to invoke a program in the memory 245 to perform an operation of a network device shown in the foregoing method embodiment.

The network side device may further include a network interface 246, and the interface is, for example, a common public radio interface (Common Public Radio Interface, CPRI).

Specifically, the network side device 2400 in this embodiment of this application further includes instructions or a program stored in the memory 245 and capable of being run on the processor 244. The processor 244 invokes the instructions or the program in the memory 245 to perform the method performed by the modules shown in FIG. 19 or FIG. 21, and same technical effects are achieved. To avoid repetition, details are not described herein again.

An embodiment of this application further provides a readable storage medium. The readable storage medium stores a program or instructions. The program or the instructions are executed by a processor to implement the processes in the embodiments of the transmission processing method or transmission configuration method, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement processes in the embodiments of the transmission processing method or transmission configuration method, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the embodiments of the transmission processing method or transmission configuration method, and same technical effects can be achieved. To avoid repetition, details are not described herein again.

An embodiment of this application further provides a wireless communication system, including a terminal and a network side device. The terminal may be configured to perform the steps of the foregoing transmission processing method, and the network side device may be configured to perform the steps of the foregoing transmission processing method.

An embodiment of this application further provides a wireless communication system, including a terminal and a network side device. The terminal may be configured to perform the steps of the foregoing transmission configuration method, and the network side device may be configured to perform the steps of the foregoing transmission configuration method.

It should be noted that in this specification, the term "include", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the methods and apparatuses in the implementations of this application is not limited to performing functions in a sequence shown or discussed, and may further include performing functions in a basically simultaneous manner or in a reverse sequence based on related functions. For example, the described methods may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. A transmission processing method, comprising:
determining, by a terminal, a valid random access occasion, wherein the valid random access occasion comprises a random access occasion in an uplink subband of a first time domain unit or a random access occasion in the frequency domain of a second time domain unit, and the second time domain unit is an uplink time domain unit or a flexible time domain unit not configured with a subband; and
performing, by the terminal, transmission on the valid random access occasion.

2. The method according to claim 1, wherein the determining, by a terminal, a valid random access occasion comprises:
obtaining, by the terminal, a configuration from a network side device or a predefined rule; and
determining, by the terminal, the valid random access occasion based on the rule in random access occasions configured by the network side device, wherein
the rule comprises one of the following:
the valid random access occasion is located in the uplink subband of the first time domain unit; or
in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than an SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is located is greater than or equal to a fourth value.

3. The method according to claim 2, wherein the third time domain unit is a downlink time domain unit that is located before the valid random access occasion and that has a smallest interval from the valid random access occasion in the random access slot, and the third time domain unit is not configured with a subband;
the fourth time domain unit is a downlink or uplink time domain unit that is located before the valid random access occasion and that has a smallest interval from the valid random access occasion in the random access slot, and the fourth time domain unit is not configured with a subband; and
the fifth time domain unit is a downlink or uplink time domain unit that is located after the valid random access occasion and that has a smallest interval from the valid random access occasion in the random access slot, and the fifth time domain unit is not configured with a subband.

4. The method according to claim 2 or 3, wherein the first information is a time division duplexing uplink-downlink common configuration.

5. The method according to any one of claims 2 to 4, wherein the determining, by the terminal, the valid random access occasion based on the rule in random access occasions configured by the network side device comprises:
in a case in which the time division duplexing uplink-downlink common configuration is received, determining, by the terminal, that a random access occasion, in a random access slot, that is located in the uplink subband of the first time domain unit and that has an interval greater than or equal to the third value from the fourth time domain unit is the valid random access occasion.

6. The method according to any one of claims 2 to 5, wherein the first value and the second value are equal to a value of an interval N_{gap} symbols.

7. The method according to any one of claims 1 to 6, further comprising:
receiving, by the terminal, configuration information that is of a random access occasion and that is sent by the network side device, wherein
in the configuration information, a first configuration and a second configuration are the same configuration, or the first configuration and the second configuration are separate configurations;
the first configuration is a configuration of a random access occasion located in the uplink subband of the first time domain unit; and
the second configuration is a configuration of a random access occasion located in the frequency domain of the second time domain unit.

8. The method according to any one of claims 1 to 7, wherein the performing, by the terminal, transmission on the valid random access occasion comprises:
receiving, by the terminal, a spatial domain parameter sent by the network side device; and
sending, by the terminal, at least one of the following on the valid random access occasion based on the spatial domain parameter:
a first message in a 2-step random access procedure;
a first message in a 4-step random access procedure;
a third message in the 4-step random access procedure;
a configured grant based small data transmission;
a common physical uplink control channel PUCCH used to acknowledge a fourth message in the 4-step random access procedure; and
a random access success response message.

9. A transmission processing method, comprising:
receiving, by a network device, transmission performed by a terminal on a valid random access occasion, wherein the valid random access occasion comprises a random access occasion in an uplink subband of a first time domain unit or a random access occasion in the frequency domain of a second time domain unit; and
the second time domain unit is an uplink time domain unit or a flexible time domain unit not configured with a subband.

10. The method according to claim 9, wherein the valid random access occasion is a random access occasion that conforms to a specific rule; and
the rule comprises one of the following:
the valid random access occasion is located in the uplink subband of the first time domain unit; or
in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is greater than or equal to a fourth value.

11. The method according to claim 9 or 10, further comprising:
sending, by the network side device, a spatial domain parameter; and
the receiving, by a network device, transmission performed by a terminal on a valid random access occasion comprises:
receiving, by the network device, at least one of the following sent by the terminal on the valid random access occasion based on the spatial domain parameter:
a first message in a 2-step random access procedure;
a first message in a 4-step random access procedure;
a third message in the 4-step random access procedure;
a configured grant based small data transmission;
a common physical uplink control channel PUCCH used to acknowledge a fourth message in the 4-step random access procedure; and
a random access success response message.

12. A transmission configuration method, comprising:
receiving, by a terminal, a spatial domain parameter sent by a network side device; and
performing, by the terminal, transmission on a first uplink resource or a first downlink resource based on the spatial domain parameter, wherein
the first uplink resource comprises a resource in an uplink subband of a sixth time domain unit or a resource in a seventh time domain unit;
the first downlink resource comprises a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

13. The method according to claim 12, wherein the first uplink resource is a resource that overlaps an SSB or a common control channel transmission in the time domain in the uplink subband of the sixth time domain unit; and
the first downlink resource is a resource that overlaps an uplink transmission in the time domain in the downlink subband of the eighth time domain unit.

14. The method according to claim 12 or 13, wherein the spatial domain parameter comprises at least one of the following:
spatial domain parameters corresponding to different SSBs or common control channels; and
spatial domain parameters corresponding to different uplink transmission, wherein the uplink transmission is associated with an SSB.

15. The method according to claim 12, wherein the spatial domain parameters corresponding to the different SSBs comprise at least one of the following:
a spatial domain parameter used for uplink transmission associated with an SSB; and
a spatial domain parameter used for downlink transmission corresponding to the uplink transmission associated with an SSB.

16. The method according to any one of claims 12 to 15, wherein the spatial domain parameter comprises a transmission configuration indicator TCI state or spatial relation information.

17. The method according to any one of claims 12 to 16, wherein the first uplink resource comprises a valid random access occasion.

18. A transmission configuration method, comprising:
sending, by a network side device, a spatial domain parameter to a terminal; and
receiving, by the network side device, transmission performed by the terminal on a first uplink resource or a first downlink resource based on the spatial domain parameter, wherein
the first uplink resource comprises a resource in an uplink subband of a sixth time domain unit or a resource in a seventh time domain unit;
the first downlink resource comprises a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

19. The method according to claim 18, wherein the spatial domain parameter comprises at least one of the following:
spatial domain parameters corresponding to different SSBs or common control channels; and
spatial domain parameters corresponding to different uplink transmission, wherein the uplink transmission is associated with an SSB.

20. The method according to claim 19, wherein the spatial domain parameters corresponding to the different SSBs comprise at least one of the following:
a spatial domain parameter used for uplink transmission associated with an SSB; and
a spatial domain parameter used for downlink transmission corresponding to the uplink transmission associated with an SSB.

21. A transmission processing apparatus, comprising:
a determining module, configured to determine a valid random access occasion, wherein the valid random access occasion comprises a random access occasion in an uplink subband of a first time domain unit or a random access occasion in the frequency domain of a second time domain unit, and the second time domain unit is an uplink time domain unit or a flexible time domain unit not configured with a subband; and
a first transmission module, configured to perform transmission on the valid random access occasion.

22. The apparatus according to claim 21, wherein the determining module comprises:
an obtaining submodule, configured to obtain a configuration from a network side device or a predefined rule; and
a determining submodule, configured to determine the valid random access occasion based on the rule in random access occasions configured by the network side device, wherein
the rule comprises one of the following:
the valid random access occasion is located in the uplink subband of the first time domain unit; or
in a case in which a terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is greater than or equal to a fourth value.

23. The apparatus according to claim 21 or 22, wherein that the first transmission module is configured to perform transmission on the valid random access occasion comprises:
the first transmission module is configured to receive a spatial domain parameter sent by the network side device; and
the first transmission module is configured to send at least one of the following on the valid random access occasion based on the spatial domain parameter:
a first message in a 2-step random access procedure;
a first message in a 4-step random access procedure;
a third message in the 4-step random access procedure;
a configured grant based small data transmission;
a common physical uplink control channel PUCCH used to acknowledge a fourth message in the 4-step random access procedure; and
a random access success response message.

24. A transmission processing apparatus, comprising:
a first receiving module, configured to receive transmission performed by a terminal on a valid random access occasion, wherein the valid random access occasion comprises a random access occasion in an uplink subband of a first time domain unit or a random access occasion in the frequency domain of a second time domain unit; and
the second time domain unit is an uplink time domain unit or a flexible time domain unit not configured with a subband.

25. The apparatus according to claim 24, wherein the valid random access occasion is a random access occasion that conforms to a specific rule; and
the rule comprises one of the following:
the valid random access occasion is located in the uplink subband of the first time domain unit; or
in a case in which the terminal is not configured with first information, the valid random access occasion is located in the uplink subband of the first time domain unit, and the valid random access occasion is not earlier than a first synchronization signal block SSB in a random access slot in which the valid random access occasion is located, and has an interval greater than or equal to a first value from a first SSB; or in a case in which the terminal is configured with first information, the valid random access occasion is located in the uplink subband of the first time domain unit, and the valid random access occasion is not earlier than a first SSB in a random access slot in which the valid random access occasion is located, has an interval greater than or equal to a second value from a first SSB, and has an interval greater than or equal to the second value from a third time domain unit; and the first SSB is an SSB that is located before the valid random access occasion and that has a smallest interval from the valid random access occasion; or
the valid random access occasion is located in the uplink subband of the first time domain unit, and an interval between the valid random access occasion in a random access slot and a fourth time domain unit is greater than or equal to a third value; and
the valid random access occasion is located in the uplink subband of the first time domain unit, and an interval between the valid random access occasion in the random access slot and a fifth time domain unit is greater than or equal to a fourth value.

26. A transmission configuration apparatus, comprising:
a second receiving module, configured to receive a spatial domain parameter sent by a network side device; and
a second transmission module, configured to perform transmission on a first uplink resource or a first downlink resource based on the spatial domain parameter, wherein
the first uplink resource comprises a resource in an uplink subband of a sixth time domain unit or a resource in a seventh time domain unit;
the first downlink resource comprises a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

27. The apparatus according to claim 26, wherein the spatial domain parameter comprises at least one of the following:
spatial domain parameters corresponding to different SSBs or common control channels; and
spatial domain parameters corresponding to different uplink transmission, wherein the uplink transmission is associated with an SSB.

28. The apparatus according to claim 27, wherein the spatial domain parameters corresponding to the different SSBs comprise at least one of the following:
a spatial domain parameter used for uplink transmission associated with an SSB; and
a spatial domain parameter used for downlink transmission corresponding to the uplink transmission associated with an SSB.

29. A transmission configuration apparatus, comprising:
a first sending module, configured to send a spatial domain parameter to a terminal; and
a third receiving module, configured to receive transmission performed by the terminal on a first uplink resource or a first downlink resource based on the spatial domain parameter, wherein
the first uplink resource comprises a resource in an uplink subband of a sixth time domain unit or a resource in a seventh time domain unit;
the first downlink resource comprises a resource in a downlink subband of an eighth time domain unit or a resource in a ninth time domain unit; and
the seventh time domain unit is an uplink time domain unit not configured with a subband, and the ninth time domain unit is a downlink time domain unit not configured with a subband.

30. The apparatus according to claim 29, wherein the spatial domain parameter comprises at least one of the following:
spatial domain parameters corresponding to different SSBs or common control channels; and
spatial domain parameters corresponding to different uplink transmission, wherein the uplink transmission is associated with an SSB.

31. A terminal, comprising a processor and a memory, wherein the memory stores a program or instructions capable of being run on the processor, and the program or the instructions are executed by the processor to implement the steps of the transmission processing method according to any one of claims 1 to 8, or the steps of the transmission configuration method according to any one of claims 12 to 17.

32. A network side device, comprising a processor and a memory, wherein the memory stores a program or instructions capable of being run on the processor, and the program or the instructions are executed by the processor to implement the steps of the transmission processing method according to any one of claims 9 to 11, or the steps of the transmission processing method according to any one of claims 18 to 20.

33. A readable storage medium, wherein the readable storage medium stores a program or instruction, and the program or instructions are executed by a processor to implement the steps of the transmission processing method according to any one of claims 1 to 8, or the steps of the transmission processing method according to any one of claims 9 to 11, or the steps of the transmission configuration method according to any one of claims 12 to 17, or the steps of the transmission processing method according to any one of claims 18 to 20.
